# EUROPÄISCHE PATENTSCHRIFT

(11) **EP 3 592 184 B1**
(45) Veröffentlichungstag und Bekanntmachung des Hinweises auf die Patenterteilung: **14.07.2021**
(21) Anmeldenummer: 18710465.8
(22) Anmeldetag: 12.03.2018
(51) Int. Cl.: A47J 31/06

(54) **SET ZUR VERWENDUNG BEI DER ZUBEREITUNG EINES GETRÄNKS MIT EINER GETRÄNKEZUBEREITUNGSVORRICHTUNG**
SET FOR USE IN THE PREPARATION OF A BEVERAGE BY MEANS OF A BEVERAGE PREPARATION DEVICE
ENSEMBLE DESTINÉ À ÊTRE UTILISÉ LORS LA PRÉPARATION D'UNE BOISSON AU MOYEN D'UN DISPOSITIF DE PRÉPARATION DE BOISSON

(30) Priorität: 10.03.2017 EP 17160245; 10.03.2017 EP 17160248
(43) Veröffentlichungstag der Anmeldung: 15.01.2020
(73) Patentinhaber: Delica AG, 4127 Birsfelden (CH)
(72) Erfinder: AFFOLTER, Roland, 5103 Möriken (CH); THILLA, Tim, 79576 Weil am Rhein (DE); BRÖNNIMANN, Markus, 3274 Hermrigen (CH)
(74) Vertreter: Hepp Wenger Ryffel AG
(86) Internationale Anmeldenummer: PCT/EP2018/056069
(87) Internationale Veröffentlichungsnummer: WO 2018/162758

(56) Entgegenhaltungen:
- WO-A1-2011/058329
- WO-A1-2013/117990
- WO-A1-2013/153526

## Beschreibung

Die vorliegende Erfindung betrifft ein Set umfassend einen Adapter und eine Kapsel zur Verwendung bei der Zubereitung eines Getränkes mit einer Getränkezubereitungsvorrichtung, wobei der Adapter gemeinsam mit der Kapsel in die Getränkezubereitungsvorrichtung einlegbar ist.

Im Stand der Technik sind eine Vielzahl von unterschiedlichen Portionsverpackungen und Systemen zur Herstellung von Getränken bekannt. Insbesondere Kapseln werden häufig zur Zubereitung von unterschiedlichen Heissgetränken, allen voran Kaffee oder Tee, aber auch von Milch-Mischgetränken, im Heimgebrauch eingesetzt. Üblicherweise umfassen solche Kapseln, die als Einwegprodukte konzipiert sind, einen Kapselkörper zur Aufnahme der Getränkezutaten sowie einen den Kapselkörper abdeckenden Deckel. Bei den Zutaten handelt es sich meist um geröstete und gemahlene Kaffeebohnen, teilweise aber auch um getrocknete Teeblätter. Allerdings kommen auch lösliche Produkte im Allgemeinen oder Konzentrate in Frage. Bei der eigentlichen Zubereitung wird unter Druck stehendes Wasser durch die Kapsel geleitet, wodurch es zu einer Extraktion bzw. zu einem Auflösen des in der Kammer enthaltenen Materiales kommt.

In jüngerer Zeit hat die Anzahl kommerziell erhältlicher Getränkezubereitungssysteme, welche auf Kapseln der oben genannten Art basieren, signifikant zugenommen. Dabei umfasst jedes der Systeme in der Regel Kapseln verschiedener Gestalt und Grösse. Um es einem Benutzer zu ermöglichen, eine Kapsel eines Systems mit einer Getränkezubereitungsvorrichtung eines anderen Systems zu verwenden, sind zudem verschiedene Adapter erhältlich. Die Druckschrift WO 2013/153526 A1 (siehe Fig. 7) offenbart ein Set zur Verwendung bei der Zubereitung eines Getränks mit einer Getränkezubereitungsvorrichtung, umfassend eine Kapsel C umfassend einen Kapselkörper mit einem flanschartigen Rand, einen Deckel, welcher am Rand angebracht ist und den Kapselkörper zum Ausbilden einer Substanzkammer verschliesst, wobei die Kapsel in der Substanzkammer eine Substanz für die Zubereitung des Getränks enthält; einen Adapter 1, der eine Kapselseite (= Innenseite) und eine Vorrichtungsseite (= Aussenseite) aufweist, wobei auf der Kapselseite Mittel zum Einleiten einer Flüssigkeit in die Kapsel sowie Mittel zum Ableiten einer Flüssigkeit aus der Kapsel angeordnet sind und wobei auf der Vorrichtungsseite ein Einlass für eine von der Getränkezubereitungsvorrichtung bereitgestellte Flüssigkeit sowie ein Auslass angeordnet sind; wobei der Einlass mit den Mitteln zum Einleiten der Flüssigkeit in die Kapsel und der Auslass mit den Mitteln zum Ableiten der Flüssigkeit aus der Kapsel jeweils fluidmässig verbunden sind, und wobei der Adapter und die Kapsel derart in einer Bereitschaftsstellung miteinander verbunden sind, dass sie aus der Bereitschaftsstellung in eine Betriebsstellung bringbar sind, in welcher der Einlass des Adapters und die Substanzkammer der Kapsel fluidmässig miteinander verbunden sind (siehe Seite 13, Zeile 19 bis Seite 14, Zeile 16). Ferner beschreibt beispielsweise die EP 2 401 945 A1 eine Adaptervorrichtung für eine Getränkezubereitungsvorrichtung. Die besagte Adaptervorrichtung stellt einen Aufnahmeraum bereit, der an die Aussenkontur einer Kapsel angepasst ist, und in welche diese eingelegt werden kann. Nachdem der Aufnahmeraum mit einem Deckel verschlossen wurde, ist die Adaptervorrichtung mit der Kapsel in einen Kapselhalter der Getränkezubereitungsvorrichtung einlegbar, der für eine Kapsel eines anderen Typs ausgelegt ist. Die Adaptervorrichtung stellt Mittel zum Einleiten einer Flüssigkeit in die Kapsel sowie Mittel zum Ableiten einer Flüssigkeit aus der Kapsel bereit, welche mit denjenigen der Getränkezubereitungsvorrichtung korrespondieren. Diese Adaptervorrichtung stellt eine Möglichkeit bereit, um eine Kapsel mit Getränkezubereitungsvorrichtungen unterschiedlicher Systeme zu verwenden.

Allerdings hat die besagte Adaptervorrichtung den Nachteil, dass sie aufgrund der Tatsache, dass die Kapsel vollständig umschlossen wird, mehrteilig ausgeführt sein muss. Des Weiteren führt die Vorrichtung zu einer verhältnismässig grossen Reduktion des verfügbaren Volumens des Kapselhalters. Auch ist sie nur in Kombination mit einem einzelnen Kapseltyp einsetzbar, da die Aufnahme exakt an die Aussenkontur der Kapsel angepasst ist. Nicht zuletzt ist die Verwendung einer derartigen Adaptervorrichtung umständlich, da der Benutzer nach erfolgter Getränkezubereitung die Adaptervorrichtung öffnen muss, um die Kapsel aus deren Aufnahme zu entfernen.

Es ist daher eine Aufgabe der vorliegenden Erfindung, die oben genannten Nachteile im Stand der Technik zu überwinden. Insbesondere ist es eine Aufgabe der vorliegenden Erfindung ein Set aus Adapter und Kapsel zur Verwendung bei der Zubereitung eines Getränkes mit einer Getränkezubereitungsvorrichtung zur Verfügung zu stellen, welches einfacher und kostengünstiger zu fertigen und anzuwenden ist. Das Set soll insbesondere eine grössere Benutzerfreundlichkeit bieten.

Diese Aufgaben werden durch ein Set gelöst, welches die Merkmale gemäss Anspruch 1 aufweist. Dieses Set ist zur Verwendung bei der Zubereitung eines Getränkes mit einer Getränkezubereitungsvorrichtung geeignet, wobei das Set eine Kapsel und einen Adapter umfasst und in die Getränkezubereitungsvorrichtung einlegbar ist. Die Kapsel umfasst einen Kapselkörper mit einem insbesondere flanschartigen Rand, einen Deckel, welcher am Rand angebracht ist und den Kapselkörper zum Ausbilden einer Substanzkammer, insbesondere hermetisch, verschliesst. Die Kapsel enthält in der Substanzkammer eine Substanz für die Zubereitung des Getränks. Diese Substanz kann eine Trockensubstanz, beispielsweise Kaffeepulver oder Milchpulver, und/oder ein Getränkekonzentrat sein. Der Adapter weist eine Kapselseite und eine Vorrichtungsseite auf. Auf der Kapselseite sind Mittel zum Einleiten einer Flüssigkeit in die Kapsel sowie Mittel zum Ableiten einer Flüssigkeit aus der Kapsel angeordnet. Auf der Vorrichtungsseite sind ein Einlass für eine von der Getränkezubereitungsvorrichtung bereitgestellte Flüssigkeit sowie ein Auslass angeordnet. Der Einlass ist mit den Mitteln zum Einleiten der Flüssigkeit in die Kapsel und der Auslass mit den Mitteln zum Ableiten der Flüssigkeit aus der Kapsel jeweils fluidmässig verbunden. Der Adapter und die Kapsel sind derart in einer Bereitschaftsstellung verbunden und insbesondere vormontiert, dass sie aus der Bereitschaftsstellung insbesondere aufeinander zu in eine Betriebsstellung bringbar sind. In dieser Betriebsstellung sind der Einlass des Adapters und die Substanzkammer der Kapsel fluidmässig miteinander verbunden.

Dadurch, dass das Set aus Kapsel und Adapter vormontiert ist, wird die Benutzerfreundlichkeit wesentlich erhöht. Das Set kann wie eine herkömmliche Kapsel einfach in die Getränkezubereitungsvorrichtung eingesetzt werden. Durch die Verwendung eines Sets aus Kapsel und Adapter ist eine hohe Modularität möglich, welche ein einfaches Anpassen an unterschiedliche Getränkezubereitungsvorrichtungen, an unterschiedliche Anforderungen der für die Zubereitung verwendeten Getränkesubstanzen sowie an das gewünschte Getränk erlaubt. Ein derartiges Set bestehend aus Adapter und Kapsel bietet insbesondere den Vorteil, dass die Kapsel deutlich einfacher aufgebaut sein kann als solche, die bei vergleichbaren Anwendungen üblicherweise eingesetzt werden. Dadurch gestalten sich der Prozess und die Anlage zum Abfüllen einer solchen Kapsel mit einer Getränkesubstanz einfacher. Ferner ist es einfacher, eine derartige Kapsel in sauerstoffdichter Ausführung herzustellen.

Die Kapsel kann einfach ausgestaltet sein und insbesondere ohne komplexe Konturen oder Konstruktionen ausgestaltet sein. Durch die Ausgestaltung mit einem flanschartigen Rand kann der Deckel einfach montiert und die Kapsel verschlossen werden. Der Deckel kann aus einer Verbundstruktur, insbesondere umfassend eine Aluminiumfolie und ein Vlies, gebildet sein. Die Aluminiumfolie verleiht dabei der Verbundstruktur die Dichtigkeit, welche erforderlich ist um den Kapselkörper hermetisch zu verschliessen. Durch den Einsatz eines Vlieses in der Verbundstruktur kann zusätzlich eine Filterfunktion erzielt werden, wenn die Aluminiumfolie penetriert oder geborsten ist. Ebenso ist jedoch auch eine Ausführung ohne Vlies denkbar, beispielsweise bei der Verwendung von Milchkonzentrat als Getränkesubstanz. Alternativ zur Verbundstruktur kann auch eine Kunststofffolie oder eine Verbundstruktur mit mehreren Schichten unterschiedlicher Materialen, wie beispielsweise Kunststoff oder Aluminium, eingesetzt werden. Anstelle von Aluminium kann auch eine mehrschichtige Verbundstruktur aus PET/SiOx/PP (Polyethylenterephthalat / Siliciumoxid-Barrierefolie / Polypropylen) sowohl für die Kapsel als auch für den Deckel zur Anwendung kommen. Auch die Kapsel kann aus Aluminium gefertigt sein. Der flanschartige Rand kann einen umlaufenden Kragen aufweisen, welcher sich in Richtung quer zum Deckel über den Deckel hinaus erstreckt. Eine solche Ausgestaltung der Kapsel ist insbesondere vorteilhaft, wenn, je nach Ausgestaltung von Dichtungselementen am Adapter, auch am äusseren Rand des Kapselkörpers eine Dichtverbindung mit dem Adapter hergestellt werden muss.

Die Aussenhülle der Kapsel kann sauerstoff- und/oder aromadicht sein. Durch eine sauerstoffdichte Ausführung der Aussenhülle kann ein Eindringen von Sauerstoff in die Kapsel während der Lagerung einer darin enthaltenen Getränkesubstanz im Wesentlichen vermieden werden. Entsprechend kann ein Altern der Getränkesubstanz, beispielsweise von Kaffeepulver, durch Oxidation vermieden werden. Eine sauerstoffdichte Kapsel ist in der Regel auch aromadicht. Daher wird ein Austreten von in der Getränkesubstanz enthaltenen Aromastoffen während der Lagerung derselben innerhalb der Kapsel im Wesentlichen verhindert.

Sauerstoff- und/oder Aromadichtigkeit ist erforderlich, um insbesondere bei Kaffee eine Mindesthaltbarkeit von 12 Monaten, vorzugsweise von 18 Monaten zu erreichen. Entsprechend wird im vorliegenden Zusammenhang unter einer sauerstoff- und/oder aromadichten Kapsel eine Kapsel verstanden, in welcher Kaffeepulver für eine Dauer von mindestens 12 Monaten, vorzugsweise mindestens 18 Monaten, bei Raumtemperatur an Atmosphärenluft lagerbar ist, ohne dass es zu einer Veränderung des Kaffeepulvers kommen würde, welche die Qualität eines daraus hergestellten Kaffeegetränkes signifikant beeinträchtigt.

Der Kapselkörper, bzw. die gesamte Kapsel, kann eine Oberflächenbereinigte Oxygen Transmission Rate (OTR) in der Einheit cm³ pro m² pro Tag pro 0,21 bar von weniger als 20, vorzugsweise weniger als 10, bevorzugterweise weniger als 5, haben. Die OTR gibt an, welche Menge an Sauerstoff pro Flächen- und Zeiteinheit durch den Kapselkörper diffundiert.

Der Adapter hat den Vorteil, dass sowohl das Einleiten der Flüssigkeit in die Kapsel als auch das Ableiten derselben aus der Kapsel an nur einer Seite der Kapsel erfolgen. Dadurch muss der Adapter die Kapsel nicht vollständig umschliessen und kann konstruktiv deutlich einfacher ausgeführt sein. Ein aufwändiges Einlegen der Kapsel in den Adapter entfällt. Darüber hinaus ist es möglich, innerhalb gewisser Grenzen Kapseln unterschiedlicher Grösse und Gestalt mit ein und demselben Adapter zu verwenden, da die Grösse und Form der Kapsel durch diesen nicht fest vorgegeben sind. Dies ermöglicht es unter anderem, die Menge einer mit einer Kapsel eingesetzten Getränkesubstanz zur Zubereitung eines Getränkes der jeweiligen Rezeptur anzupassen. Durch die Verwendung eines Adapters können maschinenspezifische Anordnungen der Flüssigkeitszufuhr und der Getränkeabfuhr an die Bedürfnisse der Kapsel angepasst werden.

Der Adapter kann eine im Wesentlichen scheibenförmige Form haben.

Der Adapter kann in der Bereitschaftsstellung so an der Kapsel vormontiert sein, dass der Deckel der Kapsel im Abstand zur Kapselseite des Adapters gehalten ist und die Mittel zum Einleiten der Flüssigkeit in die Kapsel und die Mittel zum Ableiten der Flüssigkeit aus der Kapsel nicht mit der Substanzkammer der Kapsel kommunizieren können. Entsprechend ist der Deckel noch unversehrt und die Kapsel verschlossen. Je nach Ausgestaltung der Kapsel und des gewählten Materials ist die Kapsel somit aromadicht und die Getränkesubstanz vor Kontakt mit Sauererstoff geschützt.

Die Kapselseite des Adapters weist eine Struktur zum Festhalten und/oder Positionieren der Kapsel auf. Diese Struktur kann in Form eines umlaufenden Kragens ausgestaltet sein. Eine derartige Struktur gewährleistet, dass der Adapter zur Getränkezubereitung richtig auf der Kapsel positioniert ist. Die Struktur verbindet Adapter und Kapsel vor der Getränkezubereitung miteinander, so dass diese gemeinsam als Set bzw. Einheit in die Getränkezubereitungsvorrichtung eingelegt werden können. Dies vereinfacht die Handhabung für einen Benutzer. Anstelle oder zusätzlich zum umlaufenden Kragen kann auch im Zentrum der Kapsel und des Adapters durch eine geeignete Struktur eine Verrastung vorgesehen sein.

Der Kragen umfasst vorzugsweise eine Einbuchtung zum Eingreifen in eine Aussparung der Kapsel. Dadurch kann auch eine gewünschte gegenseitige Orientierung von Adapter und Kapsel sichergestellt und für den Transport aufrecht erhalten werden.

Die Struktur kann Rastmittel, insbesondere in Form einer ganz oder teilweise umlaufenden Nut und/oder einer Rastnase aufweisen, mit denen die Kapsel, insbesondere an ihrem flanschartigen Rand, vorzugsweise an einem umlaufenden Kragen, verrastbar und/oder einpressbar vormontiert ist. Es ist ebenfalls denkbar, dass anstelle eines umlaufenden Kragens nur einzelne Rastsegmente vorhanden sind, welche mit dem flanschartigen Rand der Kapsel zusammenwirken. Damit kann die Kapsel in der Bereitschaftsstellung gehalten werden, in der der Deckel der Kapsel im Abstand zur Kapselseite und vor den Mitteln zum Einleiten und Ableiten einer Flüssigkeit gehalten ist. Eine Vormontage mittels Rastmittel ist besonders einfach und kann effizient in einem Produktionsprozess oder im Verpackungsprozess integriert werden.

Der Kapselkörper kann im Zentrum einen vorzugsweise hohlzylindrischen Rücksprung aufweisen, an dem die Kapsel an einem korrespondierenden Vorsprung am Adapter eingerastet ist. Die Substanzkammer der Kapsel oder die Kapsel selbst kann eine ringförmige oder donutförmige Ausgestaltung aufweisen. Eine solche Verrastung im Zentrum des Kapselkörpers kann alternativ oder in Kombination mit einer Verrastung am umlaufenden Kragen vorgesehen sein.

Es ist auch denkbar, dass die Kapsel beispielsweise nur im Randbereich von einer Bereitschaftsstellung in eine Betriebsstellung wechselt, während die Kapsel und der Adapter im zentralen Bereich ihre relative Positionen beibehalten. Beispielsweise wird die Kapsel vom Wechsel aus der Bereitschaftsstellung in die Betriebsstellung deformiert. Die Kapsel ist entsprechend flexibel ausgestaltet. Ebenso kann die Kapsel nur im zentralen Bereich aus einer Bereitschaftsstellung in eine Betriebsstellung wechseln und im Randbereich relativ zum Adapter eine fixe Position beibehalten.

Der Adapter kann ausser durch Rastmittel auch durch Reibschluss, Verschweissen, Verkleben, Versiegeln oder über Sollbruchstellen sowie durch Kombinationen dieser Möglichkeiten an der Kapsel vormontiert sein. Solche Arten der Vormontage benötigen andere oder allenfalls keine spezifische konstruktive Anpassung des Adapters an die Kapsel oder umgekehrt. Entsprechend kann die Herstellung des Adapters oder der Kapsel weiter vereinfacht und optimiert werden. Es ist jedoch auch denkbar, dass der Adapter und die Kapsel in der Bereitschaftsstellung und in der Betriebsstellung stoffschlüssig miteinander verbunden sind. Beispielsweise sind Biegegelenke, Schnapp- oder Klappelemente denkbar, welche einen solchen Wechsel von einer Bereitschaftsstellung in eine Betriebsstellung ermöglichen.

Der Adapter kann an der Kapsel derart vormontiert sein, dass Adapter und Kapsel unter Einwirkung einer Presskraft aus der Bereitschaftsstellung in eine Betriebsstellung pressbar sind, in welcher Adapter und Kapsel fluidmässig kommunizieren können und insbesondere der Einlass des Adapters fluidmässig mit der Substanzkammer der Kapsel verbunden ist. Üblicherweise werden Kapseln beim Einlegegen in einer Getränkezubereitungsvorrichtung in einem Kapselhalter eingeschlossen. Der Adapter und die Kapsel können entsprechend so ausgestaltet und vormontiert sein, dass beim Schliessen des Kapselhalters der Getränkezubereitungsvorrichtung die beiden von der Bereitschaftsstellung in die Betriebsstellung gebracht werden. Der Einlass des Adapters wird somit fluidmässig mit der Substanzkammer der Kapsel verbunden. Eine von der Getränkezubereitungsvorrichtung bereitgestellte Flüssigkeit, meist Wasser, kann dann über den Einlass des Adapters und die Mittel zum Einleiten der Flüssigkeit in in die Substanzkammer der Kapsel eingebracht werden.

Die Kapselseite des Adapters kann einen Einleitbereich, in welchem die Mittel zum Einleiten der Flüssigkeit in die Kapsel angeordnet sind, und/oder einen Ableitbereich, in welchem die Mittel zum Ableiten der Flüssigkeit aus der Kapsel angeordnet sind, aufweisen. Der Einleitbereich und/oder der Ableitbereich können durch zumindest ein Dichtungselement begrenzt sein, durch welches mit dem Deckel der Kapsel in der Betriebsstellung zumindest eine Dichtverbindung herstellbar ist. Dadurch kann ein unbeabsichtigtes Austreten von Flüssigkeit am Übergang vom Adapter zur Kapsel während der Getränkeherstellung wirkungsvoll vermieden werden. Insbesondere können der Einleitbereich und der Ableitbereich durch zumindest ein Dichtungselement voneinander getrennt sein, durch welches mit dem Deckel der Kapsel eine Dichtverbindung herstellbar ist. Dadurch kann wirkungsvoll ein unerwünschtes Überströmen von Flüssigkeit vom Einleitbereich in den Ableitbereich, ohne die Kapsel zu passieren, vermieden werden.

Der Adapter kann, gegebenenfalls einschliesslich des Dichtungselementes, einstückig, zweistückig oder auch dreistückig, insbesondere durch Spritzguss, vorzugsweise aus einem Kunststoffmaterial, hergestellt sein. Durch die einstückige Ausführung wird die konstruktive Komplexität des Adapters weiter reduziert, wodurch dieser kostengünstiger hergestellt werden kann. Insbesondere Spritzguss ist dabei sehr gut zur Massenproduktion geeignet.

Auf der Kapselseite des Adapters können Penetrationselemente zum Erzeugen wenigstens einer Öffnung im Deckel in einer Betriebsstellung angeordnet sein, welche gegen den Deckel der Kapsel gerichtet sind. Solche Penetrationselemente ermöglichen und vereinfachen eine fluidmässige Kommunikation zwischen Adapter und Kapsel.

Die Mittel zum Einleiten der Flüssigkeit in die Kapsel können als zumindest ein Penetrationselement zum Penetrieren des Deckels der Kapsel ausgebildet sein. Dadurch kann ein Flüssigkeitspfad in die Kapsel auf zuverlässige Weise hergestellt werden. Insbesondere können die Mittel zum Einleiten der Flüssigkeit in die Kapsel als zumindest eine Einstechkanüle ausgebildet sein. Eine solche ist besonders gut zum Einleiten einer Flüssigkeit in die Kapsel geeignet, da nach dem Penetrieren des Deckels die Flüssigkeit durch die Einstechkanüle ins Innere der Kapsel leitbar ist. Hierbei kann ein gerichteter Strahl ausgebildet werden, welcher gezielt in die Substanzkammer der Kapsel eingespritzt werden kann. Selbstverständlich ist es auch denkbar, dass die Einstechkanüle auf ihrer Einstechseite mit einer Strahlformungseinrichtung versehen ist, welche ein gleichmässiges Verteilen der eingespritzten Flüssigkeit in der Substanzkammer der Kapsel gewährleistet. Allerdings kann das zumindest eine Penetrationselement auch ausgewählt sein aus einer Liste bestehend aus einer Pyramide, einem Kegel, einem Pyramidenstumpf, einem Kegelstumpf, einem Zylinder und einem Prisma.

Das zumindest eine Penetrationselement kann derart ausgebildet sein, dass der Deckel der Kapsel beim Einlegen der Kapsel und des Adapters in die Getränkezubereitungsvorrichtung und Verschliessen der Vorrichtung mit dem zumindest einen Penetrationselement penetrierbar ist. Dadurch kann die Penetration des Deckels für den Benutzer erleichtert werden, da diese unter der Verwendung der Getränkezubereitungsvorrichtung beim Schliessen des eigentlichen Kapselhalters erfolgen kann. Darüber hinaus wird die Kapsel erst unmittelbar vor der Getränkezubereitung geöffnet, was eine Kontamination oder ein Auslaufen deren Inhalts wirkungsvoll vermeidet.

Die Mittel zum Ableiten der Flüssigkeit aus der Kapsel können als zumindest ein, vorzugsweise mehrere, Penetrationselement/e, insbesondere ausgewählt aus einer Liste bestehend aus Pyramiden, Dorne, Kegeln, Pyramidenstümpfen, Kegelstümpfen, Zylindern und Prismen, zum Penetrieren des Deckels der Kapsel ausgebildet sein. Derartige Penetrationselemente stellen ein wirkungsvolles Mittel zum Penetrieren des Deckels, und damit zum Herstellen eines Flüssigkeitspfades zum Ableiten der Flüssigkeit aus der Kapsel, dar. Durch die Ausgestaltung der Penetrationselemente als Pyramiden, Dorne, Kegeln, Pyramidenstümpfen, Kegelstümpfen, Zylindern oder Prismen kann der Prozess des Öffnens bewusst gesteuert werden. Insbesondere kann eingestellt werden, ob die Öffnung durch einen Innendruck im Kapselinnern oder durch die Bewegung aus der Bereitschaftsstellung in die Betriebsstellung erzeugt wird. Ausserdem kann eingestellt werden, ob sich eine einmal erzeugte Öffnung unter dem Kapselinnendruck weiter vergrössert oder gleich bleibt. Werden mehrere Penetrationselemente eingesetzt, kann der Deckel an mehreren Stellen penetriert werden. Es wurde festgestellt, dass durch die mehrfache Penetration des Deckels die unerwünschte Bildung von bevorzugten Flüssigkeitspfaden innerhalb der Getränkesubstanz im Inneren der Kapsel (sogenanntes Channeling) vermieden werden kann. Dadurch kann eine gute Perkolation bzw. Extraktion der in der Kapsel enthaltenen Getränkesubstanz gewährleistet werden.

Die Mittel zum Ableiten der Flüssigkeit aus der Kapsel können, insbesondere zusätzlich, als zumindest ein, vorzugsweise mehrere, Stützelement/e, insbesondere ausgewählt aus einer Liste bestehend aus Pyramiden, Kegeln, Pyramidenstümpfen, Kegelstümpfen, Zylindern und Prismen, ausgebildet sein. Das zumindest eine Stützelement kann derart ausgebildet sein, dass der Deckel der Kapsel nach dem Einlegen derselben und des Adapters in die Getränkezubereitungsvorrichtung auf dem Stützelement aufliegt. Durch einen während einer Getränkezubereitung aufgebauten Kapselinnendruck ist der Deckel dann, insbesondere zusätzlich zu einer Penetration beim Schliessen einer Getränkezubereitungsvorrichtung, zum Bersten bringbar. Auf diese Weise kann insbesondere bei Kaffeegetränken eine besonders hohe Qualität erzielt werden, da erst die Flüssigkeit in die Kapsel eingeleitet wird und die Getränkesubstanz unter Komprimierung der in der Kapsel enthaltenen Luft benetzt wird, bevor ein Flüssigkeitspfad zum Ableiten der Flüssigkeit aus der Kapsel geschaffen wird. Darüber hinaus kann der geborstene, und optional zusätzlich auch penetrierte, Deckel ebenfalls die Funktion eines Filterelementes übernehmen.

Die Mittel zum Ableiten der Flüssigkeit aus der Kapsel auf der Kapselseite des Adapters können wenigstens eine Sammelrinne umfassen, welche in der Betriebsstellung zusammen mit dem Deckel der Kapsel einen Fluidkanal bilden. Durch die Ausbildung eines Kanals wird die aus der Kapsel austretende Flüssigkeit gesammelt und gezielt abgeleitet. Ein unkontrolliertes Nachtropfen nach Beendigung der Getränkezubereitung wird verhindert oder zumindest reduziert. Ausserdem können mehrere Sammelrinnen angeordnet sein, welche ausgehend von allen oder von einem Teil der Penetrationselemente gegen das Zentrum des Adapters gerichtet sind.

Die Mittel zum Ableiten der Flüssigkeit aus der Kapsel, der Auslass und gegebenenfalls auch der Ableitbereich können im Zentrum des Adapters angeordnet sein. Dies ermöglicht es, dass je nach Ausführung der Getränkezubereitungsmaschine, ein Auffanggefäss für das zubereitete Getränk, beispielsweise eine Kaffeetasse, mittig zentriert direkt unterhalb des Adapters und der Kapsel aufgestellt werden kann.

Die Mittel zum Einleiten der Flüssigkeit in die Kapsel, der Einlass und gegebenenfalls auch der Einleitbereich können in einem Randbereich des Adapters angeordnet sein. Bevorzugt sind die Mittel zum Einleiten einer Flüssigkeit in die Kapsel dabei als ein insbesondere umlaufender Kanal oder eine Rinne ausgebildet. Dadurch kann das Zentrum des Adapters für andere Teile freigehalten werden. Darüber hinaus kann beim Einsatz von beispielsweise mehreren Einstechkanülen eine bessere Verteilung der Flüssigkeit über die in der Kapsel enthaltene Getränkesubstanz erzielt werden.

Der Adapter kann an seinem Vorsprung eine Steigrinne aufweisen, welche in der Betriebsstellung zusammen mit dem korrespondierenden Rücksprung der Kapsel einen Steigkanal bildet, der zum Auslass des Adapters und somit zu dessen Vorrichtungsseite führt. Ein Steigkanal im Fliesspfad des Getränkes, welcher vor dem eigentlichen Auslass angeordnet ist, verhindert oder reduziert ein Nachtropfen nach Beendigung der Getränkezubereitung.

Die Steigrinne kann derart ausgestaltet sein, dass sie zusammen mit dem Rücksprung der Kapsel eine Auslassdüse zur Ausbildung eines Getränkestrahls formt. Durch die Formung eines Getränkestrahls ist eine zusätzliche Möglichkeit des Beeinflussens der Eigenschaften des zubereiteten Getränkes gegeben.

Im Bereich der Auslassdüse kann eine Lufteinlassöffnung, insbesondere ein Lufteinlassschlitz derart angeordnet sein, dass der Getränkestrahl Luft mitreissen kann. Entsprechend wird das ausgegebene Getränk mit Luft vermischt. Insbesondere bei der Herstellung eines Kaffeegetränks kann eine Schaumbildung gewünscht sein. Auch bei der Herstellung eines Milchgetränks wird häufig eine Schaumbildung gewünscht, beispielsweise für einen Cappuccino oder einen Latte Macchiato.

Der Adapter kann im Auslass eine Prallwand aufweisen, gegen welche die Auslassdüse gerichtet ist. Ein Getränkestrahl wird somit auf diese Prallwand treffen, so dass sich eine zusätzliche Vermischung des Getränkes mit Luft ergibt. Ebenfalls führt eine solche Prallwand zu einer gleichmässigen Ausgestaltung des Getränke-Luft-Gemisches.

Der Auslass kann eine Engstelle, insbesondere einen Spalt aufweisen. Durch diese Ausgestaltung des Auslasses kann beim Passieren einer Flüssigkeit eine erhöhte Scherwirkung erzielt werden. Dies erlaubt insbesondere bei der Herstellung von Kaffeegetränken eine verbesserte Crema, wie sie insbesondere bei Getränken von der Art eines Espressos typisch ist. Wenn die Engstelle in Form eines Spaltes ausgeführt ist, kann diese zusätzlich die Funktion eines Ventils wahrnehmen, welches erst unter ansteigendem Flüssigkeitsdruck innerhalb der Kapsel öffnet und damit ein frühzeitiges Austreten des Getränkes verhindert. Dies ermöglicht insbesondere ein Vorbrühen einer Getränkesubstanz zur Zubereitung eines Kaffeegetränkes. Entsprechend wird mit dem Adapter eine tropfenweise Ausgabe der Flüssigkeit vermieden und lediglich eine kontinuierliche Ausgabe ermöglicht. Ausserdem kann ein Nachtropfen von Flüssigkeit nach erfolgter Getränkezubereitung vermieden werden, wenn die Kapsel gemeinsam mit dem Adapter als Set aus der Getränkezubereitungsvorrichtung entfernt wird.

Rund um den Vorsprung des Adapters kann ein Sammelkanal angeordnet sein. Dieser Sammelkanal sammelt das aus der Kapsel austretende Getränk, so dass dieses gezielt dem Auslass zugeführt werden kann.

Der Kapselkörper der Kapsel kann ein Tiefziehteil, beispielsweise aus Kunststoff oder Aluminium sein. Ebenso ist es denkbar, dass der Kapselkörper ein Spritzgussteil ist. Der Adapter ist vorzugsweise ein Spritzgussteil. Vorzugsweise bestehen sowohl der Kapselkörper und der Adapter aus Kunststoff. Die Wahl des Materials und die Herstellungsmethode beeinflussen zu einem grossen Teil die Herstellungskosten des Sets. Gleichzeitig wird durch die Herstellung des Kapselkörpers im Tiefziehverfahren die Möglichkeit geschaffen, eine aromadichte und/oder sauerstoffdichte Kapsel in hoher Stückzahl günstig herzustellen. Durch die Herstellung des Adapters im Spritzgussverfahren eröffnen sich hingegen Möglichkeiten, komplexe Konstruktionen sowohl in hoher Stückzahl als auch in hoher Präzision auszubilden. Dies ist insbesondere bei der Ausgestaltung des Adapters mit Lufteinlassöffnung und Prallwand im Auslass hilfreich.

Die Vorrichtungsseite des Adapters kann zumindest einen maschinenlesbaren Code aufweisen, welcher von einer Getränkezubereitungsvorrichtung, insbesondere zum Einstellen von deren Betriebsparametern, lesbar ist, wenn der Adapter gemeinsam mit der Kapsel in die Getränkezubereitungsvorrichtung eingelegt ist.

Alternativ dazu kann beim Adapter die Kapselseite zumindest einen maschinenlesbaren Code aufweisen, welcher von einer Getränkezubereitungsvorrichtung, insbesondere zum Einstellen von deren Betriebsparametern, lesbar ist. Zu diesem Zweck kann der Adapter insbesondere zumindest teilweise derart transparent sein, dass der maschinenlesbare Code von der Getränkezubereitungsvorrichtung lesbar ist, wenn der Adapter gemeinsam mit der Kapsel in die Getränkezubereitungsvorrichtung eingelegt ist.

Dadurch kann bei Getränkezubereitungssystemen, welche zum Einstellen der Betriebsparameter einer Getränkezubereitungsvorrichtung auf einen oder mehrere maschinenlesbare Code/s zurückgreifen, trotz der Verwendung eines Adapters eine gewünschte Einstellung der Betriebsparameter erfolgen. Das Anbringen eines oder mehrerer maschinenlesbaren Codes am Adapter hat darüber hinaus den Vorteil, dass mit einem einzigen Kapseltyp verschiedene Getränkezubereitungsprogramme (d.h. Sets von Betriebsparametern; bspw. für "Espresso"- oder "Lungo"-Kaffee) ausgeführt werden können. Dadurch kann bei der Getränkeherstellung eine grössere Flexibilität erzielt werden. Ferner kann dadurch ein Lesefehler bei einer allfälligen Verschmutzen des maschinenlesbaren Codes, welche möglicherweise dessen Lesbarkeit beeinträchtigt, vermieden oder korrigiert werden.

Der maschinenlesbare Code kann ein 1D- oder ein 2D-Code sein. Wenn der Code ein 1D-Code ist, kann dieser ein Strichcode sein.

Wenn der Code ein 2D-Code ist, kann dieser ein gestapelter Code, beispielsweise ein Codablock, ein Code 49, oder ein PDF417 sein. In Frage kommen allerdings auch Matrixcodes, wie ein QR-Code, eine Data-Matrix, ein MaxiCode oder ein Aztec-Code. Jedoch kommen auch Punktcodes oder Composite-Codes in Frage. Allerdings sind auch sämtliche weiteren optoelektronisch lesbaren Schriften sowie Farbmarkierungen oder taktile Codierungen zur Verwendung in Kombination mit der vorliegenden Erfindung geeignet.

Alternativ dazu kann der Adapter auch zumindest ein Fenster aufweisen, durch welches ein auf dem Deckel der Kapsel angebrachter maschinenlesbarer Code durch die Getränkezubereitungsvorrichtung, insbesondere zum Einstellen deren Betriebsparameter, lesbar ist, wenn der Adapter gemeinsam mit der Kapsel in die Getränkezubereitungsvorrichtung eingelegt ist. Diese Ausgestaltung des Adapters stellt sicher, dass bei der Verwendung einer Kapsel stets die richtigen Parameter bei der Getränkezubereitungsvorrichtung eingestellt werden, losgelöst von der Art des verwendeten Adapters. Eine Verwechslung, welche die Einstellung von falschen Betriebsparametern bei der Getränkezubereitungsvorrichtung zur Folge haben könnte, wird damit wirkungsvoll vermieden.

Alternativ zu der oben beschriebenen Ausführung kann der Adapter auch zumindest bereichsweise derart transparent ausgebildet sein, dass ein auf dem Deckel der Kapsel angebrachter maschinenlesbarer Code durch die Getränkezubereitungsvorrichtung, insbesondere zum Einstellen von deren Betriebsparametern, lesbar ist, wenn der Adapter gemeinsam mit der Kapsel in die Getränkezubereitungsvorrichtung eingelegt ist.

Der zumindest eine maschinenlesbare Code, das zumindest eine Fenster oder der zumindest eine transparente Bereich kann auf der Vorrichtungsseite derart angeordnet sein, dass eine Linie, die den Auslass mit dem Zentrum des maschinenlesbaren Codes, des Fensters oder des transparenten Bereiches verbindet, und eine Linie, die den Einlass mit dem Auslass verbindet, durch einen minimalen Winkelabstand von 70° getrennt sind. Durch einen Winkelabstand des Fensters oder des transparenten Bereiches zum Einlass von grösser oder gleich 70° kann eine Verschmutzung des maschinenlesbaren Codes, das Fensters oder des transparenten Bereiches besonders wirksam vermieden werden.

Ein weiterer Aspekt der vorliegenden Erfindung betrifft eine Getränkezubereitungssystem umfassend ein Set wie vorgängig beschrieben und eine Getränkezubereitungsvorrichtung.

Weitere Vorteile und Einzelmerkmale der vorliegenden Erfindung ergeben sich aus der nachfolgenden Beschreibung mehrerer Ausführungsbeispiele und aus den Zeichnungen.

Es zeigen schematisch:
- Figur 1:: eine Draufsicht auf einen Adapter von der Kapselseite;
- Figur 2:: eine Draufsicht auf einen Adapter von der Vorrichtungsseite;
- Figur 3:: eine perspektivische Darstellung eines Adapters von der Kapselseite;
- Figur 4:: eine perspektivische Darstellung eines Adapters von der Vorrichtungsseite;
- Figuren 5 und 6:: perspektivische Darstellungen eines Kapselkörpers einer Kapsel zur Verwendung mit einem Adapter;
- Figur 7:: eine perspektivische Darstellung einer Kapsel zur Verwendung mit einem Adapter;
- Figur 8:: eine perspektivische Zusammenschau eines Sets bestehend aus Adapter und Kapsel vor dessen Vormontage;
- Figuren 9 und 10:: eine perspektivische Darstellungen eines Sets in Betriebsstellung;
- Figur 11:: eine Schnittansicht durch das Set gemäss den Figuren 9 und 10;
- Figur 12:: eine Vergrösserung des Teilbereichs A aus Figur 11;
- Figur 13:: eine alternative Schnittansicht durch das Set gemäss den Figuren 9 und 10;
- Figur 14:: eine Vergrösserung des Teilbereichs B aus Figur 13;
- Figur 15:: eine perspektivische Zusammenschau eines Sets und einer Getränkezubereitungsvorrichtung (teilweise dargestellt);
- Figur 16:: eine perspektivische Schnittansicht der Zusammenschau gemäss Figur 15;
- Figuren 17 und 18:: Schnittansichten der Zusammenschau gemäss Figur 15, wobei das Set in der Betriebsstellung dargestellt ist;
- Figuren 19 bis 21:: verschiedene alternative Ausführungsformen eines Adapters;
- Figur 22:: eine perspektivische Schnittansicht eines weiteren Ausführungsbeispiels eines Adapters;
- Figur 23:: eine Schnittansicht eines erfindungsgemässen Stets in Bereitschaftsstellung, mit dem Adapter gemäss Figur 22;
- Figur 24:: eine Vergrösserung des Teilbereichs C aus Figur 24;
- Figur 25:: eine weitere Schnittansicht des erfindungsgemässen Sets in Bereitschaftsstellung, mit dem Adapter gemäss Figur 22;
- Figur 26:: eine Vergrösserung des Teilbereichs D aus Figur 25;
- Figur 27:: eine perspektivische Schnittansicht einer weiteren Ausführungsform einer Kapsel;
- Figur 28:: eine perspektivische Schnittansicht eines weiteren Adapters zur Vormontage als Set mit der Kapsel aus Figur 27;
- Figur 29:: eine Schnittansicht eines erfindungsgemässen Sets in Bereitschaftsstellung mit der Kapsel und dem Adapter gemäss den Figuren 27 und 28;
- Figur 30:: eine Vergrösserung des Teilbereichs F aus Figur 29;
- Figur 31:: eine weitere Schnittansicht des erfindungsgemässen Sets aus Figur 29;
- Figur 32:: eine Vergrösserung des Teilbereichs E aus Figur 31;
- Figur 33:: eine Vergrösserung des Teilbereichs H aus Figur 31;
- Figur 34:: die Schnittansicht gemäss Figur 29, wobei das Set in Betriebsstellung ist;
- Figur 35:: eine Vergrösserung des Teilbereichs F aus Figur 34;
- Figur 36:: die Schnittansicht gemäss Figur 31, wobei das Set in Betriebsstellung ist;
- Figur 37:: eine Vergrösserung des Teilbereichs E aus Figur 36;
- Figur 38:: eine Vergrösserung des Teilbereichs H aus Figur 36;
- Figur 39:: eine perspektivische Darstellung des erfindungsgemässen Sets in Betriebsstellung gemäss Figur 34;
- Figur 40:: eine perspektivische Darstellung des Adapters aus dem Set gemäss Figur 39;
- Figur 41:: eine vergrösserte perspektivische Ansicht auf einen zentralen Vorsprung des Adapters gemäss Figur 40;
- Figur 42:: eine vergrösserte perspektivische Schnittansicht auf den Auslass des Sets gemäss Figur 39;
- Figuren 43a, 43b:: eine schematische Darstellung einer alternativen Ausführungsform des Wechsels aus der Bereitschaftsstellung in die Betriebsstellung;
- Figuren 44a, 44b:: eine weitere schematische Darstellung einer alternativen Ausführungsform des Wechsels aus der Bereitschaftsstellung in die Betriebsstellung.

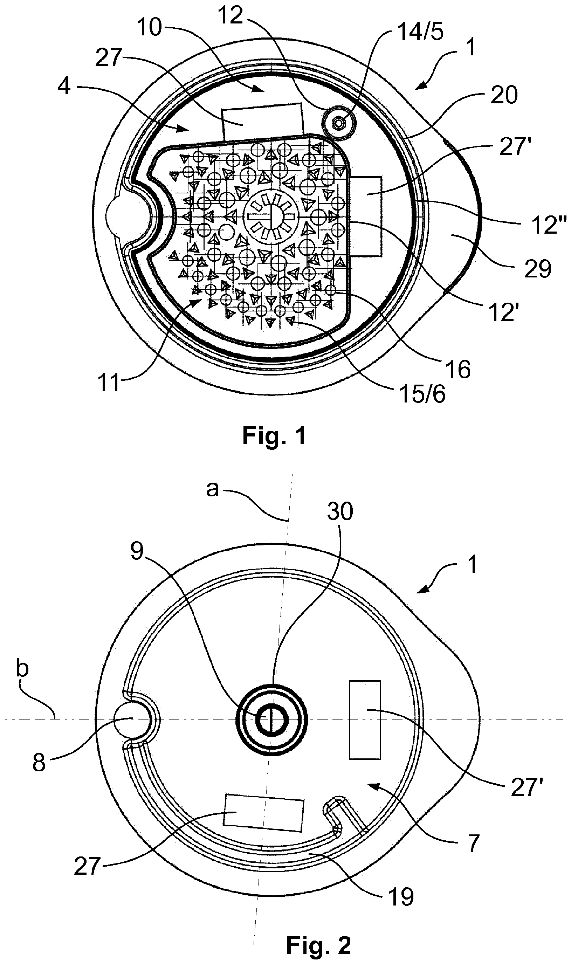

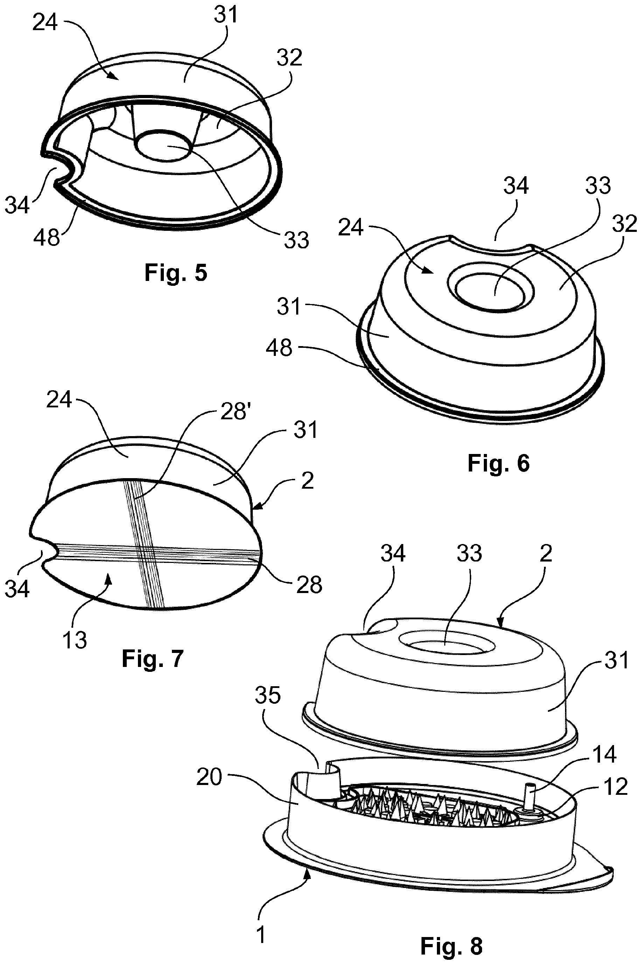

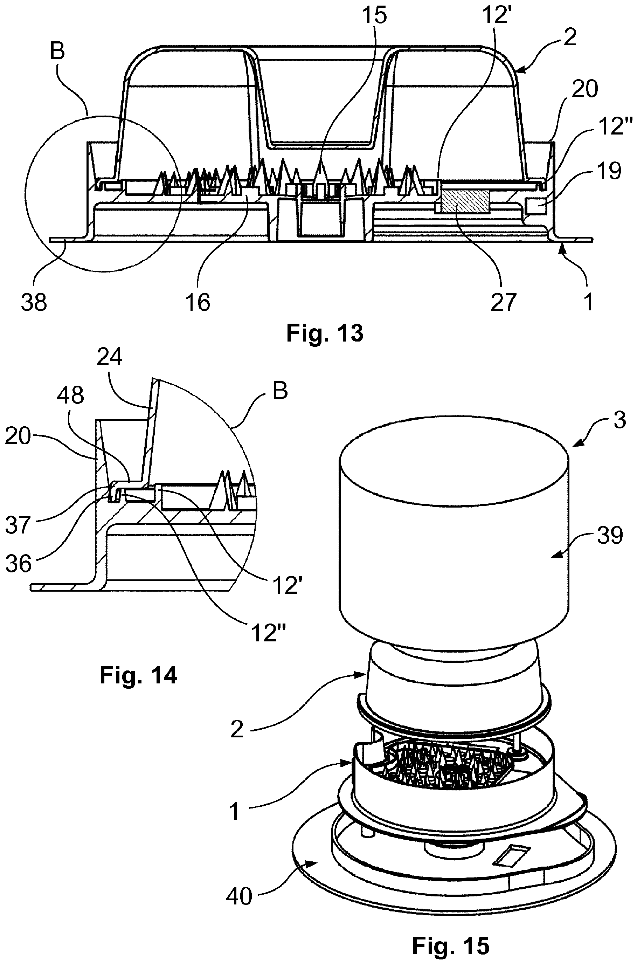

Figur 1 zeigt eine Draufsicht auf einen Adapter 1 mit Einzelheiten einer Kapselseite 4. Es ist zu erkennen, dass der Adapter 1 eine im Wesentlichen kreisrunde Form hat und eine Lasche 29 aufweist. Die Lasche 29 dient einerseits als Griffelement für einen Benutzer und andererseits zur Ausrichtung des Adapters 1 in einer Getränkezubereitungsvorrichtung 3 (siehe Figur 15). Die Kapselseite 4 des Adapters 1 weist einen Ableitbereich 11 und einen Einleitbereich 10 auf. Der Ableitbereich 11 ist von einem Dichtungselement 12' umsäumt, welches gleichzeitig den Einleitbereich 10 vom Ableitbereich 11 trennt. Ferner ist an der Kapselseite 4 eine Einstechkanüle 14 als Mittel 5 zum Einleiten einer Flüssigkeit in eine Kapsel 2 (siehe Figur 8) angeordnet. Die Einstechkanüle 14 ist von einem Dichtungselement 12 umsäumt. Der Ableitbereich 11 weist eine Vielzahl von Penetrationselementen in Form von Dreieckspyramiden 15 auf. Neben diesen Pyramiden 15 sind im Ableitbereich 11 auch Stützelemente in Form von Kegelstümpfen 16 angeordnet. Die Dreieckspyramiden 15 zusammen mit den Kegelstümpfen 16 bilden ein Mittel 6 zum Ableiten einer Flüssigkeit aus einer Kapsel. Zum Positionieren einer Kapsel 2 (siehe Figur 8) auf dem Adapter 1 weist dieser einen umlaufenden Kragen 20 auf. Ferner sind zwei transparente Bereiche 27, 27' vorhanden, durch welche ein Code auf dem Deckel 13 (siehe Figur 7) einer auf den Adapter 1 aufgesetzten Kapsel von einer Vorrichtungsseite des Adapters 1 maschinenlesbar ist.

Figur 2 zeigt in einer Draufsicht eine Vorrichtungsseite 7 des Adapters 1 mit den transparenten Bereichen 27, 27'. Darüber hinaus ist ein Auslass 9 zu erkennen, der von einem umlaufenden Kragen 30 umgeben ist. Ein Einlass 8 des Adapters 1 ist in dessen Peripherie angeordnet und mündet in einen geschlossenen Kanal 19, von dem in der vorliegenden Abbildung lediglich die Aussenkontur sichtbar ist. Der transparente Bereich 27 ist derart angeordnet, dass die Linie a, die den Auslass 9 mit einem Zentrum des transparenten Bereiches 27 verbindet, und eine Linie b, die den Einlass 8 mit dem Auslass 9 verbindet, durch einen Winkelabstand von 85° bzw. 95° getrennt sind.

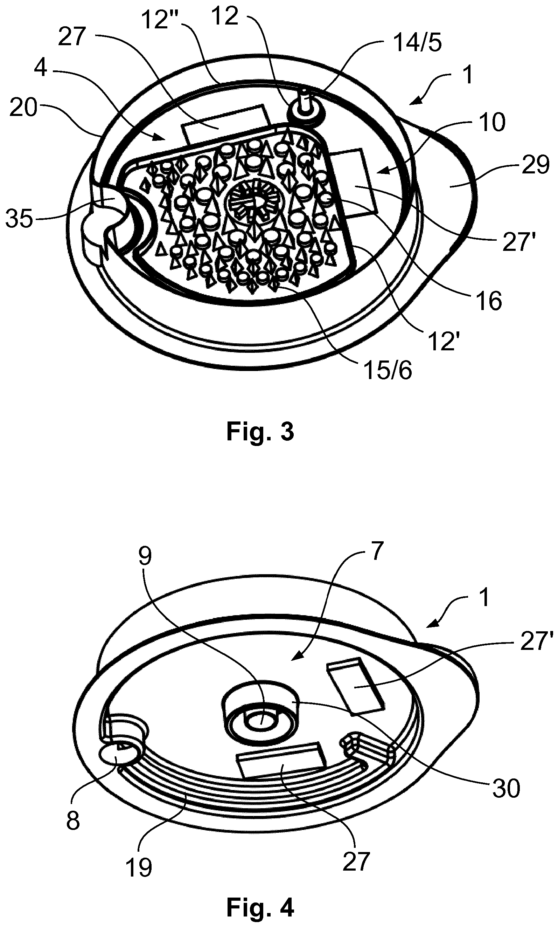

In den Figuren 3 und 4 sind die Kapsel- und Vorrichtungsseite des Adapters 1 zusätzlich in perspektivischer Darstellung gezeigt. Es ist zu erkennen, dass der Adapter 1 eine im Wesentlichen scheibenförmige Form hat. Ausserdem ist eine Einbuchtung 35 im umlaufenden Kragen 20 des Adapters 1 zu erkennen. Die Bezugszeichen sind identisch zu denjenigen in den Figuren 1 und 2, es wird auf die entsprechende Beschreibung verwiesen.

Die Figuren 5 und 6 zeigen einen Kapselkörper 24 für eine Kapsel 2 (siehe Figur 7), die zur Verwendung mit einem Adapter 1 (siehe Figuren 1 bis 4) vorgesehen ist, aus zwei unterschiedlichen Perspektiven. Der Kapselkörper 24 umfasst eine Seitenwand 31 sowie einen Boden 32. Der Boden 32 weist eine kreisrunde Erhöhung 33 auf, welche sich in Richtung der Kapselöffnung erstreckt. Ferner ist die Seitenwand 31 und ein Teil des Bodens 32 mit einer seitlichen Aussparung 34 versehen. Die Seitenwand 31 des Kapselkörpers 24 ist mit einem flanschartigen Rand 48 abgeschlossen, an welchem ein Deckel 13 (siehe Figur 7) in Form einer Verschlussfolie zum Verschliessen des Kapselkörpers 24 aufgesiegelt werden kann.

Die Figur 7 zeigt in perspektivischer Darstellung eine Kapsel 2 zur Verwendung mit einem Adapter 1 (siehe Figur 8) mit angebrachtem Deckel 13. Der Kapselkörper 24 ist mit dem Deckel 13 verschlossen. Auf dem Deckel 13 sind zwei sich kreuzende Barcodes 28, 28' aufgedruckt. Der Kapselkörper 24 bildet zusammen mit dem Deckel 13 eine Substanzkammer zur Aufnahme einer Getränkesubstanz zur Herstellung eines Getränkes. Weiter ersichtlich ist die seitliche Aussparung 34, welche sich nicht nur in der Seitenwand 31 sondern auch im Deckel 13 ausbildet.

In Figur 8 ist ein Set bestehend aus einem Adapter 1 sowie einer zum Gebrauch mit diesem Adapter 1 vorgesehenen Kapsel 2 in Zusammenschau vor deren Vormontage gezeigt. Es ist zu erkennen, dass die Aussparung 34 in der Seitenwand 31 der Kapsel 2 mit einer Einbuchtung 35 des umlaufenden Kragens 20 des Adapters 1 korrespondiert. Damit wird neben einer exakten Positionierung der Kapsel 2 auf dem Adapter 1 auch eine gewünschte Ausrichtung derselben erzielt. Weiter ersichtlich sind an der Kapsel 2 die zentrale Erhöhung 33 und am Adapter 1 die Einstechkanüle 14, welche gegen die Kapsel 2 gerichtet ist und von einem Dichtungselement 12 umgeben ist.

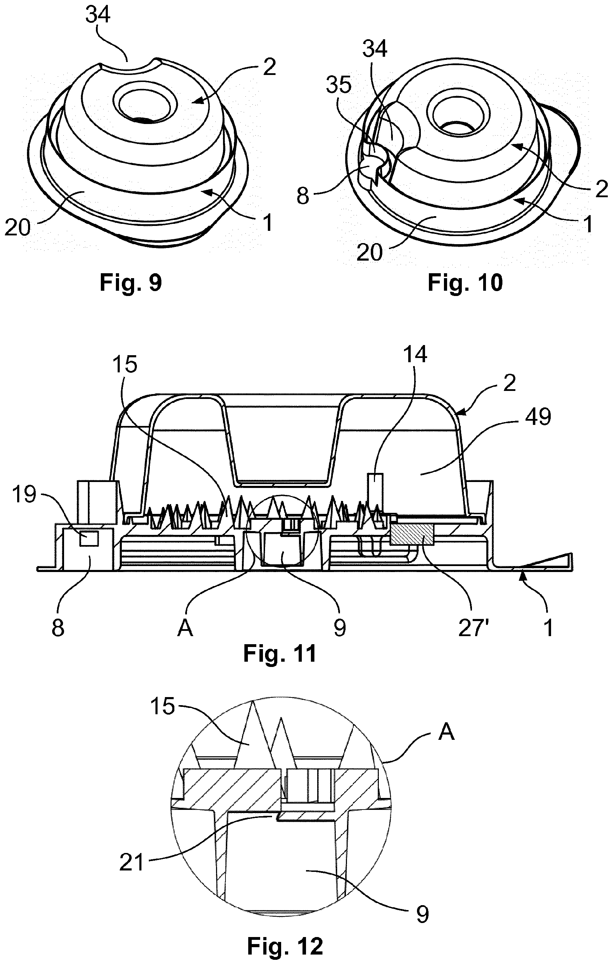

In den Figuren 9 und 10 ist die Kapsel 2 auf den Adapter 1 aufgesetzt, das Set befindet sich in Betriebsstellung. Insbesondere in Figur 10 ist zu erkennen, dass die Aussparung 34 der Kapsel 2 und die Einbuchtung 35 des umlaufenden Kragens 20 des Adapters 1 auch den erforderlichen Raum für den Einlass 8 bieten.

In der Figur 11 ist eine Schnittansicht durch das Set gemäss den Figuren 9 und 10 dargestellt. Die Kapsel 2 ist auf den Adapter 1 aufgesetzt, das Set befindet sich in der Betriebsstellung. Zur besseren Übersichtlichkeit ist der Deckel 13 (siehe Figur 7) der Kapsel 2 weggelassen. Die Schnittebene verläuft entlang der Geraden b (siehe Figur 2) durch den Einlass 8, den Auslass 9 und den transparenten Bereich 27'. In der vorliegenden Darstellung ist gut zu erkennen, dass der Einlass 8 in den Kanal 19 mündet. Ebenfalls ist zu erkennen, dass der transparente Bereich 27' durch ein quaderförmiges Element aus einem transparenten Material gebildet ist, welches in eine Aussparung in Adapter 1 eingesetzt ist. Die Pyramiden 15 und die Einstechkanüle 14 reichen in die Substanzkammer 49 der Kapsel 2 hinein. Ein Teilbereich A ist in der Figur 12 vergrössert dargestellt.

Die Figur 12 zeigt nähere Einzelheiten zum Teilbereich A der Figur 11. Es ist zu erkennen, dass die Mündung für die Flüssigkeit in den Auslass 9 als Spalt 21 ausgebildet ist. Dieser erzeugt bei der Zubereitung von Kaffeegetränken durch seine Scherkräfte eine für einen Espresso typische Crema. Darüber hinaus erfüllt der Spalt 21 eine Ventilfunktion und öffnet erst unter einem bestimmten Flüssigkeitsdruck. Somit kann ein unbeabsichtigtes Nachtropfen von Flüssigkeit nach erfolgter Getränkezubereitung verhindert werden, wenn die Kapsel gemeinsam mit dem Adapter aus der Getränkezubereitungsvorrichtung entfernt wird. Ebenfalls ist in Figur 12 deutlich eine Pyramide 15 als Penetrationselement zu erkennen.

Die Figur 13 zeigt eine alternative Schnittansicht durch das Set mit einer auf einen Adapter 1 aufgesetzten Kapsel 2 gemäss den Figuren 9 und 10. In diesem Fall verläuft die Schnittebene entlang der Geraden a, welche nahezu senkrecht zur Geraden a (siehe Figur 2) verläuft. Hier ist entsprechend der transparente Bereich 27 ersichtlich. Darüber hinaus ist ein weiterer Abschnitt des Kanals 19 sichtbar. Ebenfalls erkennbar sind die Pyramiden 15 sowie mehrere Kegelstümpfe 16, auf denen der Deckel 13 (siehe Figur 7) der Kapsel 2 aufliegen kann. Der Adapter 1 weist umlaufend einen flanschartigen Rand 38 auf. Auf der der Kapsel 2 zugewandten Seite weist der Adapter 1 ein Dichtungselemente 12' auf, welche den Ableitbereich 11 (siehe Figur 1) mit seinen Pyramiden 15 und Kegelstümpfen 16 vom Einleitbereich 10 (siehe Figur 1) abtrennt. Ein weiteres Dichtungselement 12" ist am Adapter 1 neben seinem umlaufenden Kragen 20 angeordnet und bildet eine dichte Verbindung zwischen Kapsel 2 und Adapter 1. Ein Teilbereich B ist in der Figur 14 vergrössert dargestellt.

Die Figur 14 zeigt eine Vergrösserung des Teilbereichs B gemäss Figur 13. Es ist zu erkennen, dass der Kapselkörper 24 einen flanschartigen Rand 48 umfasst. Dieser weist an seinem äusseren Bereich 37 einen umlaufenden Fortsatz 36 auf, der im Wesentlichen parallel zur Seitenwand 31 (siehe Figuren 5 und 6), also Quer zum flanschartigen Rand 48 verläuft und sich über den Deckel 13 (siehe Figur 7) hinaus erstreckt. Wenn die Kapsel 2 auf den Adapter 1 aufgesetzt und in Betriebsstellung ist, greift der umlaufende Fortsatz 36 in eine durch den umlaufenden Kragen 20 und das Dichtungselement 12" des Adapters 1 gebildete Nut ein. Der umlaufende Fortsatz 36 des Kapselkörpers 24 geht mit dem Adapter 1 eine Dichtverbindung ein. Gleichzeitig geht das Dichtungselement 12" mit dem flanschartigen Rand 48 des Kapselkörpers 24 eine Dichtverbindung ein. In den Figuren 13 und 14 ist der Deckel 13 (siehe Figur 7) der Kapsel 2 wegelassen. Es ist allerdings vorgesehen, einen solchen derart zentriert am flanschartigen Rand 48 des Kapselkörpers 24 anzubringen, dass dieser nicht zwischen das Dichtungselement 12" und den Kapselkörper 24, bzw. zwischen den umlaufende Fortsatz 36 und den Adapter 1 gerät. Es hat sich gezeigt, dass dies die Dichtwirkung signifikant reduzieren würde. Beim gezeigten Ausführungsbeispiel ist es vorgesehen, dass der Deckel 13 der Kapsel 2 zusätzlich eine Dichtverbindung mit dem Dichtelement 12' eingeht.

Figur 15 zeigt eine perspektivische Zusammenschau eines Sets und eines Oberteils 39 und eines Unterteils 40 eines Kapselhalters einer Getränkezubereitungsvorrichtung 3, wobei die Kapsel 2 und der Adapter 1 einzeln dargestellt sind.

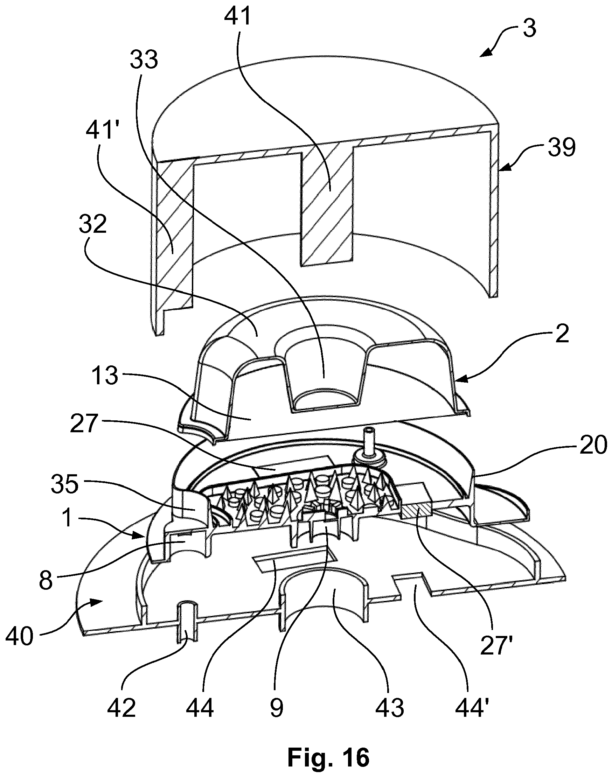

Figur 16 zeigt eine perspektivische Schnittansicht der Zusammenschau gemäss Figur 15. Es ist zu erkennen, dass der Oberteil 39 des Kapselhalters zwei Stempel 41, 41' aufweist. Ein Stempel 41 greift von der in der Darstellung oberen Seite in die Erhöhung 33 des Bodens 32 der Kapsel 2 ein. Ein Stempel 41' greift in die Einbuchtung 35 des umlaufenden Kragens 20 des Adapters 1 ein. Der Unterteil 40 des Kapselhalters weist einen Einlaufstutzen 42 auf, welcher in den Einlass 8 des Adapters 1 eingreift und über den eine unter Druck stehende Flüssigkeit bereitstellbar ist. Darüber hinaus weist der Unterteil 40 des Kapselhalters einen Auslaufstutzen 43 auf, in welchen der Auslass 9 des Adapters 1 eingreifen kann. Der Unterteil 40 des Kapselhalters verfügt ferner über zwei Lesefenster 44, 44', über welche eine Lesevorrichtung, welche Bestandteil der Getränkezubereitungsvorrichtung 3 ist, einen auf dem Deckel 13 der Kapsel 2 angebrachten maschinenlesbaren Code, beispielsweise ein Barcode 28, 28' (siehe Figur 7), durch die beiden transparenten Bereiche 27, 27' des Adapters 1 lesen kann.

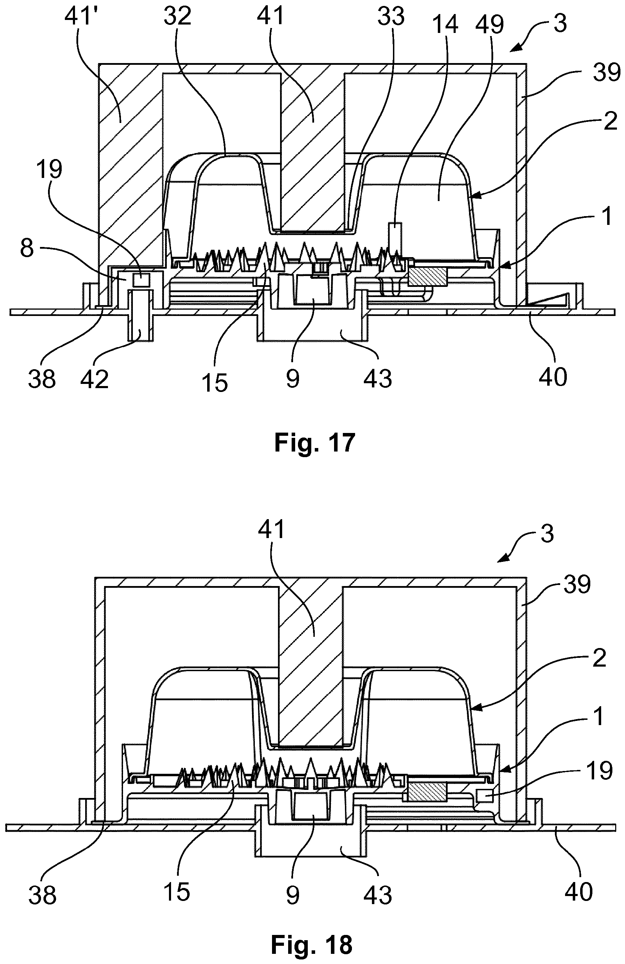

Die Figuren 17 und 18 zeigen Schnittansichten der Zusammenschau gemäss Figur 15, wobei das Set in seiner Betriebsstellung dargestellt ist. Der Adapter 1 ist mit einer Kapsel 2 im Oberteil 39 und Unterteil 40 des Kapselhalters einer Getränkezubereitungsvorrichtung 3 eingeschlossen. Es ist zu erkennen, dass der flanschartige Rand 38 des Adapters 1 zwischen dem Oberteil 39 und dem Unterteil 40 des Kapselhalters eingeklemmt ist, womit dieser dichtend abgeschlossen ist. Ferner ist zu erkennen, wie der Stempel 41 auf die Unterseite der Erhöhung 33 im Kapselboden 32 wirkt. Dadurch wird die Kapsel 2 auf den Adapter 1 gepresst, womit die Dichtungselemente 12, 12', 12" (siehe Figur 3) sowie der umlaufende Fortsatz 36 (siehe Figur 13) gemeinsam mit dem Deckel 13 (siehe Figur 7) der Kapsel 2 dichtend abschliessen. Ferner presst der Stempel 41' auf den Einlass 8 des Adapters 1. Dadurch wird der Übergang vom Einlaufstutzen 42 auf den Einlass 8 abgedichtet. Zur besseren Übersichtlichkeit ist in den Figuren 17 und 18 der Deckel der Kapsel weggelassen. Eine durch den Einlassstutzen 42 von der Getränkezubereitungsvorrichtung 3 eingespritzte Flüssigkeit gelangt in den Einlass 8 des Adapters 1 und weiter durch den Kanal 19 zur Einstechkanüle 14, welche durch den Deckel (nicht dargestellt) der Kapsel 1 in die Substanzkammer 49 ragt. Ein zubereitetes Getränk gelangt durch die von den Pyramiden 15 erstellten Öffnungen im Deckel (nicht dargestellt) in den Ableitbereich 11 (siehe Figur 1) des Adapters und somit zum Auslass 9, welcher im Auslassstutzen 43 der Getränkezubereitungsvorrichtung angeordnet ist.

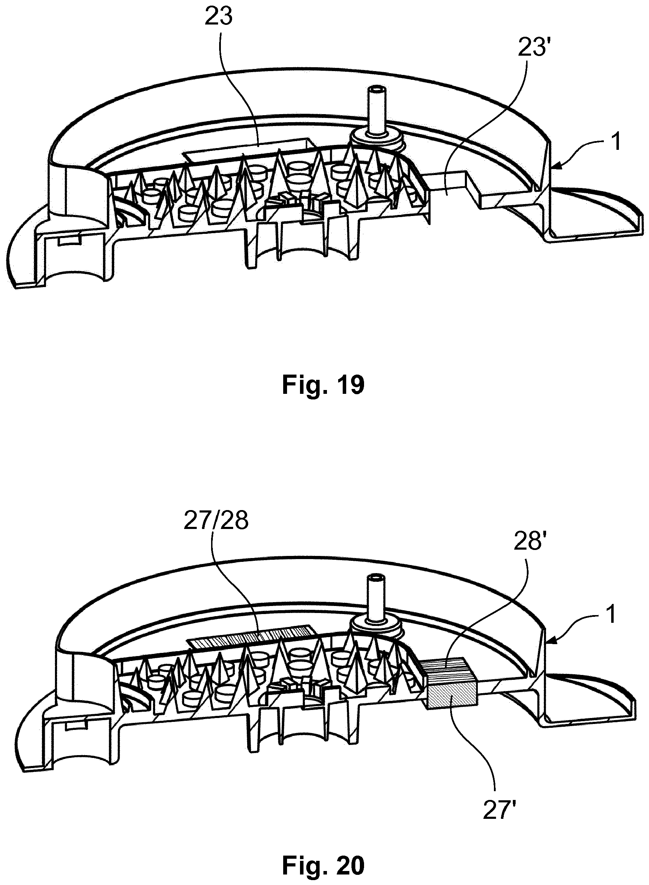

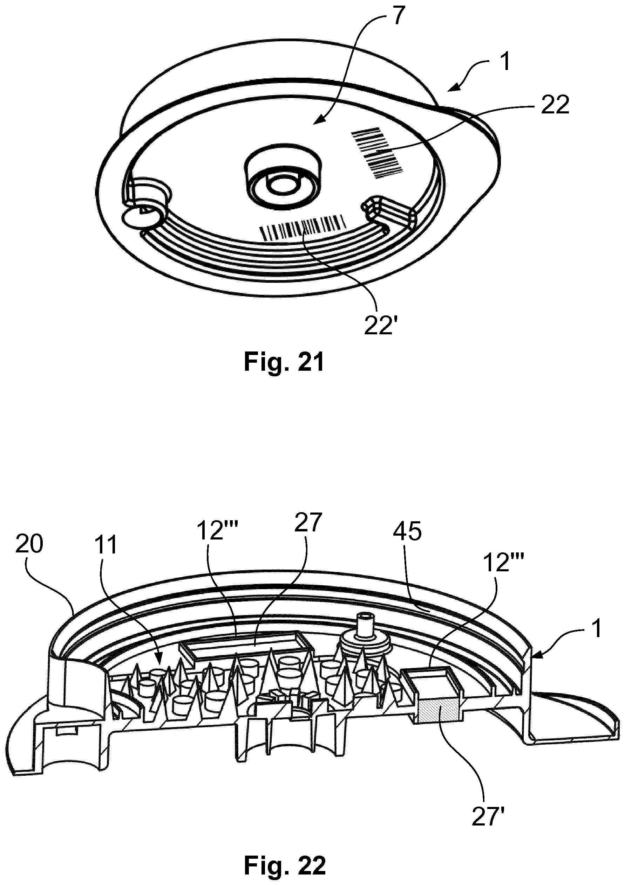

Die Figuren 19 bis 21 zeigen alternative Ausführungsformen eines Adapters 1. Im Beispiel gemäss Figur 19 weist der Adapter 1 Fenster 23, 23' in Form einer Aussparung auf, durch welche ein auf dem Deckel der Kapsel angebrachter maschinenlesbarer Code durch die Getränkezubereitungsvorrichtung lesbar ist, wenn der Adapter 1 gemeinsam mit der Kapsel in die Getränkezubereitungsvorrichtung eingelegt ist. Das Beispiel gemäss Figur 20 zeigt einen Adapter 1, der ähnlich wie das Ausführungsbeispiel gemäss den Figuren 1 bis 18 zwei transparente Bereiche 27, 27' aufweist, durch die ein maschinenlesbarer Code lesbar ist, wenn der Adapter in die Getränkezubereitungsvorrichtung eingelegt ist. Im Gegensatz zum vorgängig diskutierten Ausführungsbeispiel (Fig. 1 bis 18) ist der maschinenlesbare Code 28, 28' hier allerdings nicht auf der Kapsel aufgedruckt, sondern direkt auf den transparenten Bereichen 27, 27' des Adapters 1. Im Ausführungsbeispiel gemäss der Figur 21 sind zwei maschinenlesbare Codes 22, 22' direkt auf die Vorrichtungsseite 7 des Adapters 1 aufgedruckt. Bei den gezeigten Ausführungsbeispielen handelt es sich beim maschinenlesbaren Code 22 um einen 1D-Code, namentlich um einen Strichcode. Es versteht sich allerdings von selbst, dass die vorliegende Erfindung nicht auf derartige Codes beschränkt ist.

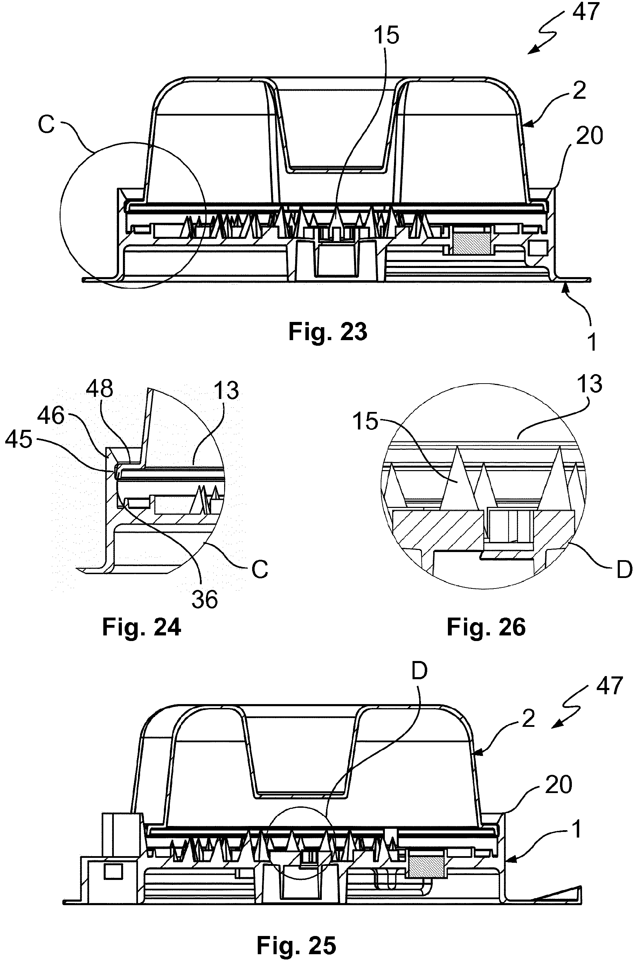

Die Figur 22 zeigt ein weiteres Ausführungsbeispiel eines Adapters 1, welcher für eine Vormontage mit einer Kapsel 2 zu einem erfindungsgemässen Set 47 (siehe Figur 23) geeignet ist. Dieser Adapter 1 ist mit dem Beispiel gemäss den Figuren 1 bis 18 verwandt. Allerdings ist um den Ableitbereich 11 kein Dichtungselement 12' (siehe Figur 1) angeordnet. Dafür sind die transpatenten Bereiche 27, 27' jeweils von einem Dichtungselement 12''' umsäumt. Es versteht sich allerdings von selbst, dass die vorliegende Erfindung nicht auf Adapter 1 mit Dichtungselementen beschränkt ist, die entweder den Ableitbereich 11 oder die transparenten Bereiche 27, 27' bzw. Fenster 23, 23' (siehe Figur 19) umsäumen. Denkbar wäre auch ein Adapter, der sowohl Dichtungselemente, die den Ableitbereich 11 umsäumen, als auch Dichtungselemente, die transpatente Bereiche 27, 27' bzw. Fenster 23, 23' umsäumen, aufweist. Der Adapter 1 weist an seinem umlaufenden Kragen 20 ein Rastmittel in Form einer umlaufenden Nut 45 auf, in welcher eine Kapsel 1 (siehe Figur 23) vormontiert in einer Bereitschaftsstellung aufgenommen werden kann. Ansonsten ist der Adapter im Wesentlichen identisch zu den vorhergehend beschriebenen Adaptern, so dass sich eine detaillierte Beschreibung erübrigt.

In den Figuren 23 bis 26 ist jeweils ein erfindungsgemässes Set 47 in Bereitschaftsstellung abgebildet, wobei die Figuren 24 und 26 vergrösserte Detailansichten der Figuren 23 und 25 sind. Die Kapsel 2 ist mit ihrem flanschartigen Rand 48, insbesondere mit ihrem umlaufenden Fortsatz 36 in der Nut 45 des umlaufenden Kragens 20 des Adapters 1 eingerastet. Um die Vormontage des Sets 47, also das Einsetzen der Kapsel 2 in den Adapter 1 zu erleichtern, weist der umlaufende Kragen 20 einen als abgeschrägte Rastnase 46 ausgebildeten Einlaufbereich auf. Der Deckel 13 der Kapsel 2 wird derart in Bezug auf die pyramidenförmigen Penetrationselemente 15 angeordnet, dass dieser unversehrt bleibt und die Kapsel 2 weiterhin verschlossen ist. Erst beim Einlegen des Sets 47, bestehend aus der Kapsel 2 und dem Adapters 1, in die Getränkezubereitungsvorrichtung und Verschliessen der Vorrichtung kommt es zu einer Penetration des Deckels 13. Diese Situation der Betriebsstellung ist in den Figuren 17 und 18 dargestellt, wobei der dort gezeigte Adapter 1 keine Nut im umlaufenden Kragen aufweist.

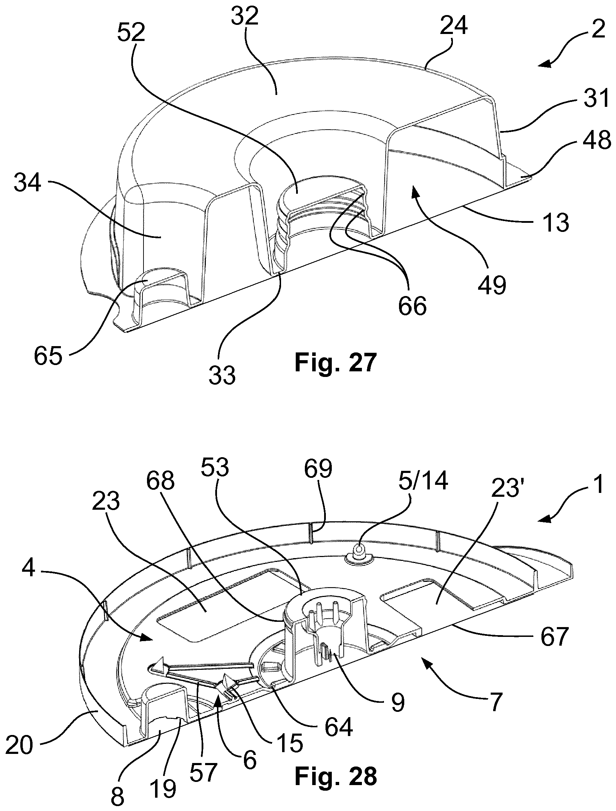

In der Figur 27 ist eine perspektivische Schnittansicht einer weiteren Ausführungsform einer Kapsel 2 dargestellt. Die Kapsel 2 umfasste einen Kapselkörper 24, welcher einen Boden 32, eine Seitenwand 31 und einen flanschartigen Rand 48 aufweist. Der Kapselkörper 24 ist durch einen Deckel 13 verschlossen, so dass sich im Innern des Kapselkörpers 24 eine Substanzkammer 49 ausbildet. Die Seitenwand 31 des Kapselkörpers 24 weist eine Aussparung 34 auf. In dieser Aussparung 34 ist im flanschartigen Rand 48 eine becherartige Struktur 65 ausgebildet, welche ebenfalls vom Deckel 13 verschlossen wird. Es besteht keine fluidmässige Verbindung zwischen dieser verschlossenen becherartigen Struktur 65 und der Substanzkammer 49. In einem zentralen Bereich des Kapselbechers 24 ist im Boden 32 eine zum Deckel gerichtete Erhöhung 33 angeordnet, welche sich bis zur Ebene des flanschartigen Randes 48 erstreckt. Der Deckel 13 ist an dieser Erhöhung 33 ebenfalls fest verbunden. Innerhalb dieser Erhöhung 33 weist der Kapselkörper 24 einen Rücksprung 52 auf, welcher sich wiederum in Richtung zum Kapselboden 32 erstreckt. Dieser Rücksprung 52 ist an seiner Innenwand mit zwei umlaufenden Rillen 66 versehen. In der Substanzkammer 49 ist eine Getränkesubstanz aufgenommen (nicht dargestellt), aus welcher unter Zufuhr einer Flüssigkeit ein Getränk hergestellt werden kann. Ein maschinenlesbarer Code (nicht gezeigt) ist am Deckel 13 der Kapsel 2 so angebracht, dass dieser von einem Lesegerät ausgelesen werden kann.

Die Figur 28 zeigt in einer perspektivischen Schnittansicht einer Ausführungsform eines Adapters 1, welcher zur Vormontage als Set mit der Kapsel 2 aus Figur 27 vorgesehen ist. Der Adapter 1 weist auf seiner der Kapsel zugeordneten Kapselseite 4 einen umlaufenden Kragen 20, Mittel 5 zum Einleiten einer Flüssigkeit in eine Kapsel und Mittel 6 zum Ableiten einer Flüssigkeit aus der Kapsel auf. Ausserdem ist ein zentraler Vorsprung 53 mit einem Auslass 9, also einer durchgehenden Verbindung von der Kapselseite 4 zur Vorrichtungsseite 7, erkennbar. Dieser Auslass 9 kann mit einem Auslassstutzen einer Getränkezubereitungsvorrichtung korrespondieren. Der Vorsprung 53 weist im oberen Bereich seiner Seitenwand eine umlaufende Rippe 68 auf, welche mit einer entsprechend Rille 66 (siehe Figur 27) einer Kapsel zusammenwirken kann. Ausserdem weist der umlaufende Kragen 20 des Adapters 1 Stützstrukturen 69 auf, welche eine Kapsel in einer Bereitschaftsstellung abstützen.

Weiter weist der Adapter 1 zwei Fenster 23, 23' auf, durch welche ein auf einer Kapsel angeordneter maschinenlesbarer Code von der Vorrichtungsseite 7 her lesbar ist. Weiter ist ein Einlass 8 ausgebildet, welcher mit einem Einlassstutzen einer Getränkezubereitungsvorrichtung korrespondieren kann. Die Vorrichtungsseite 7 des Adapters 1 ist gesamtflächig mit einem Verschlussdeckel 67 versehen, welcher insbesondere den Einlass 8 und den Auslass 9 verschliessen. Zwischen diesem Verschlussdeckel 67 und der Vorrichtungsseite 7 des Adapters 1 wird ein Kanal 19 ausgebildet, welcher den Einlass 8 des Adapters 1 mit der Einstechkanüle 14, also mit dem Mittel zum Einleiten einer Flüssigkeit in eine Kapsel, fluidmässig verbindet. Der Verschlussdeckel 67 ist zumindest im Bereich der Fenster 23, 23' derart ausgestaltet, dass ein maschinenlesbarer Code auf einer auf dem Adapter angeordneten Kapsel lesbar ist.

Die Mittel 5 zum Einleiten einer Flüssigkeit in eine Kapsel umfassen die Einstechkanüle 14, welche einen scharfkantigen Rand aufweist, um einen Deckel einer Kapsel durchstechen zu können. Die Mittel 6 zum Ableiten einer Flüssigkeit aus der Kapsel umfassen mehrere Pyramiden 15 sowie Sammelrinnen 57, welche einzelne Pyramiden 15 untereinander und/oder mit einem den Vorsprung 53 umlaufenden Sammelkanal 64 verbinden. Die Sammelrinnen 57 und der Sammelkanal 64 sind derart ausgestaltet, dass diese zusammen mit dem Deckel einer Kapsel, sofern sich diese in der Betriebsstellung auf dem Adapter befindet, einen geschlossenen Fluidkanal ausbilden.

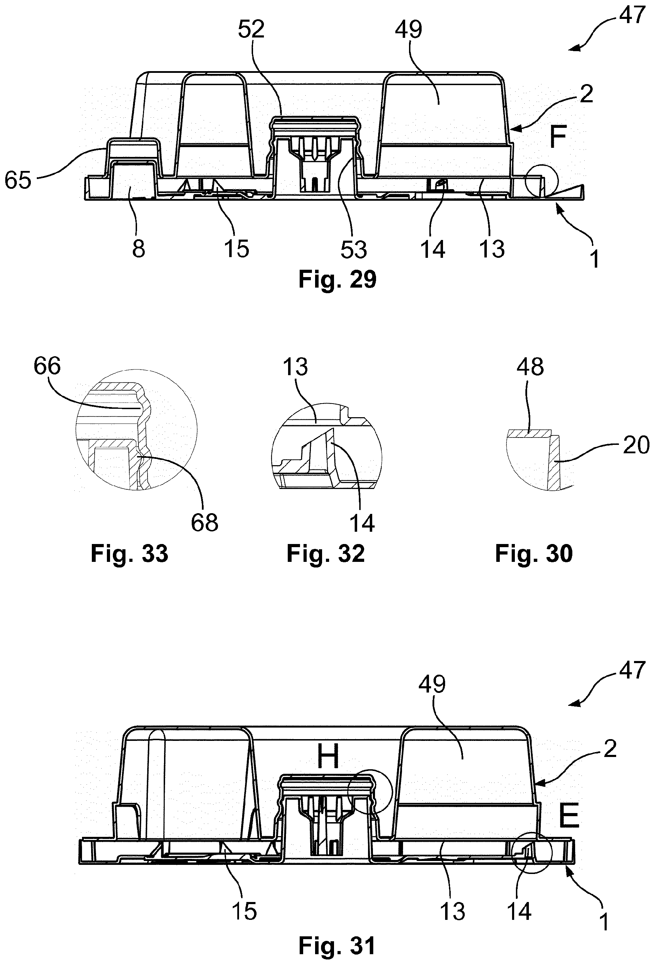

In den Figuren 29 bis 33 ist jeweils eine Schnittansicht eines erfindungsgemässen Sets 47 in Bereitschaftsstellung mit der Kapsel 2 und dem Adapter 1 gemäss den Figuren 27 und 28 dargestellt. Die Schnitte in den Figuren 29 und 31 verlaufen zueinander in etwa rechtwinklig in Analogie zu den Schnittlinien a und b der Figur 2. In den Figuren 30, 32 und 33 sind jeweils vergrösserte Ansichten spezifischer Details abgebildet.

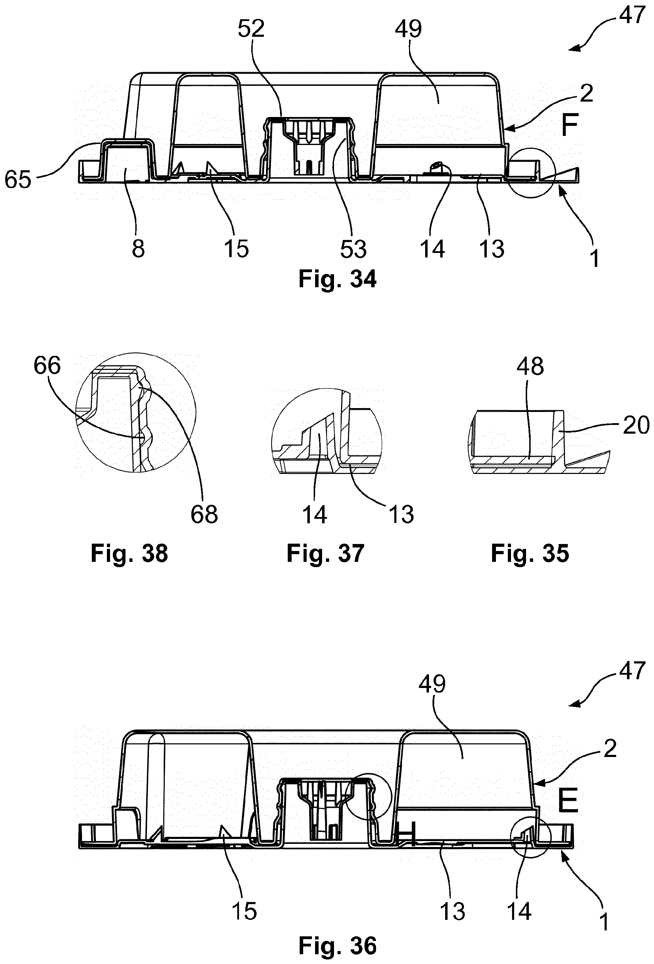

Die Kapsel 2 ist auf dem Adapter 1 in Bereitschaftsstellung aufgesetzt. Der Deckel 13 der Kapsel 2 ist im Bereich der Substanzkammer 49 intakt, so dass die Substanzkammer 49 fest verschlossen ist. Lediglich in den Bereichen der becherartigen Struktur 65 und im Bereich des Rücksprungs 52 ist der Deckel 13 durchstossen, so dass der Einlass 8 und der Vorsprung 53 des Adapters 1 in die Kapsel 2 eingreifen. Die Penetrationselemente des Adapters, namentlich die Pyramiden 15 und die Einstechkanüle 14, liegen auf dem Deckel 13 auf oder weisen gar einen Abstand zu diesem auf. Die Kapsel 2 und der Adapter 1 greifen am Rücksprung 52 und Vorsprung 53 ineinander ein, die entsprechenden Rillen 66 der Kapsel 2 mit der Rippe 68 des Adapters 1 definieren dabei die Bereitschaftsstellung bzw. die Betriebsstellung (siehe Figuren 34 bis 38). Zusätzlich stützt sich der flanschartige Rand 48 der Kapsel 2 in der Bereitschaftsstellung am umlaufenden Rand 20 des Adapters 1 ab. Der umlaufende Rand kann hierfür einzelne Stützstrukturen 69 (siehe Figur 28) aufweisen, welche jedoch beim Verschliessen einer Brühkammer einer Getränkezubereitungsvorrichtung und entsprechender Relativbewegung zwischen der Kapsel 2 und dem Adapter 1 in die Betriebsstellung überwunden werden können.

Die Figuren 34 bis 38 zeigen dieselben Schnittansichten des erfindungsgemässen Sets 47 wie schon in den Figuren 29 bis 33 dargestellt, das Set 47 befindet sich jedoch in Betriebsstellung. Die Schnittlinien wurden identisch ausgewählt. Die Kapsel 2 und der Adapter 1 wurden aus der Bereitschaftsstellung, vergleiche Figuren 29 bis 33, durch eine Relativbewegung in die Betriebsstellung gebracht. Wiederum zeigen die Figuren 35, 37 und 38 vergrösserte Ansichten spezifischer Details.

Die Kapsel 2 liegt flach auf der Kapselseite 4 (siehe Figur 28) des Adapters 1 auf. Der Einlass 8 des Adapters 1 hat sich komplett in die becherartige Struktur 65 der Kapsel 2 eingeschoben. Die Rippe 68 des zentralen Vorsprungs 53 des Adapters 1 liegt nun in der zweiten, oberen Rille 66 des Rücksprungs 52 der Kapsel 2. Der flanschartige Rand 48 der Kapsel 2 stützt sich nicht mehr an der Aussenkante des umlaufenden Kragens 20 des Adapters 1 ab sondern liegt ebenfalls flach auf dem Adapter 1 auf. Die Einstechkanüle 14 hat den Deckel 13 der Kapsel 2 durchstochen, entsprechend ist eine fluidmässige Verbindung vom Einlass 8 durch den Kanal 19 (siehe Figur 28) und die Einstechkanüle 14 in die Substanzkammer 49 geschaffen. Auch die Pyramiden 15 haben den Deckel 13 der Kapsel 2 durchstossen, so dass ein in der Substanzkammer 49 gebildetes Getränk durch die von den Pyramiden 15 geschaffenen Öffnungen in die Sammelrinnen 57 (siehe Figur 28) und den Sammelkanal 64 (siehe Figur 28) fliessen kann.

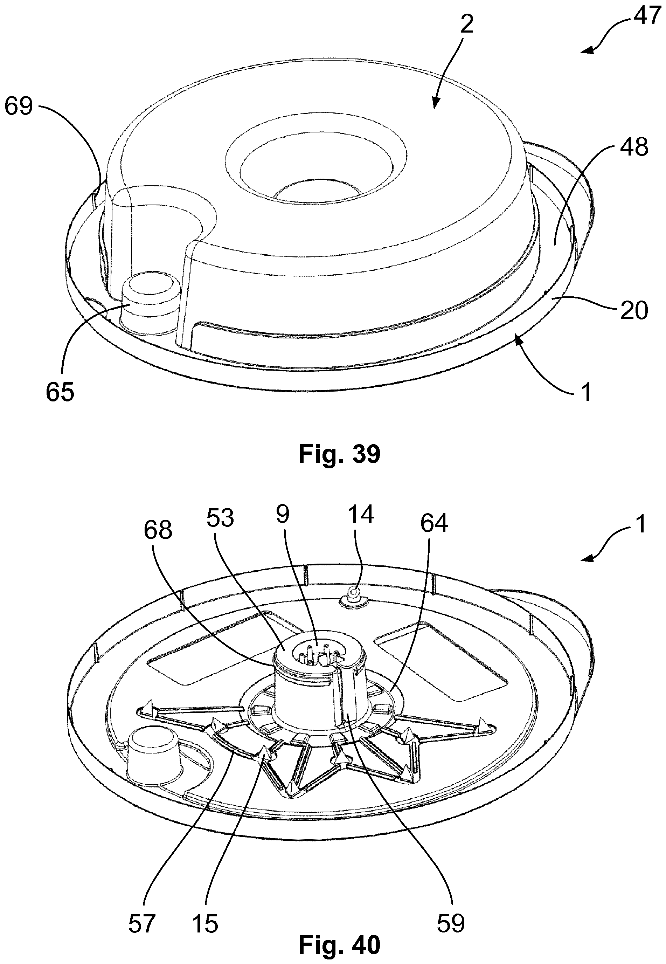

Die Figur 39 zeigt eine perspektivische Darstellung des erfindungsgemässen Sets 47 in Betriebsstellung gemäss der Figur 34. Die Kapsel 2 liegt mit ihrem flanschartigen Rand 48 nicht mehr an der Aussenkante des umlaufenden Kragens 20 des Adapters 1 an, sondern liegt flach auf dem Adapter 1 auf. Die Stützstrukturen 69 am umlaufenden Kragen 20 wurden überwunden und sind entsprechend sichtbar. Die becherartige Struktur 65 der Kapsel 2 ist mit dem Einlass 8 (siehe Figur 34) ausgerichtet und liegt komplett auf diesem auf.

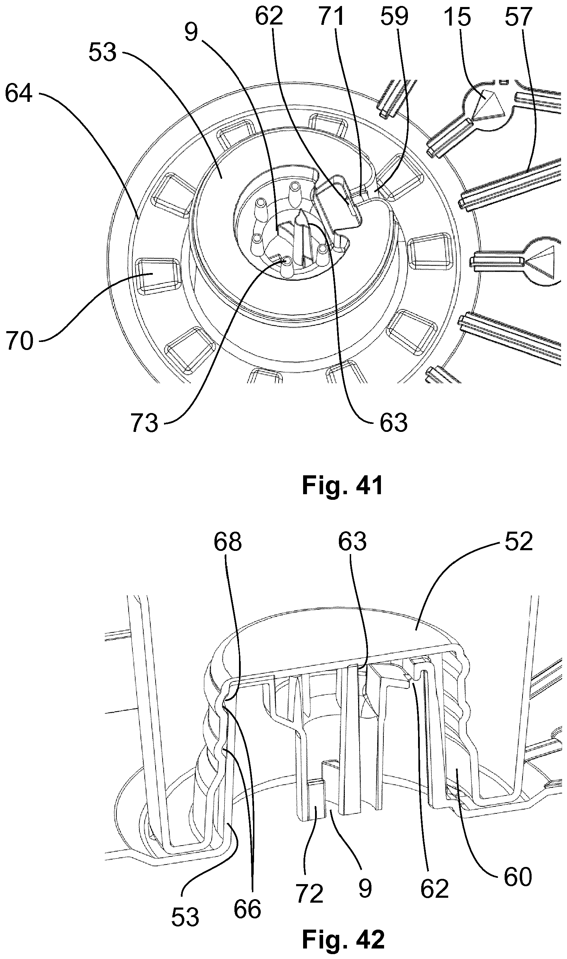

Figur 40 zeigt eine perspektivische Darstellung des Adapters 1 aus dem Set gemäss Figur 39 und entspricht dem Adapter der Figur 28. In dieser Ansicht des ganzen Adapters 1 ist am zentralen Vorsprung 53 seitlich eine Steigrinne 59 erkennbar, welche ausgehend vom den zentralen Vorsprung 53 umlaufenden Sammelkanal 64 der Seitenwand des Vorsprungs 53 zu ihrem oberen Ende entlang angeordnet ist. Diese Steigrinne 59 bildet zusammen mit der Kapsel in Betriebsstellung einen Steigkanal 60 (siehe Figur 42) aus, durch welchen das zubereitet Getränk zum Auslass 9 strömt. Weiter erkennbar sind auf der Kapselseite 4 die Mittel zum Einleiten einer Flüssigkeit in eine Kapsel ausgebildet als Einstechkanüle 14 und die Mittel zum Ableiten einer Flüssigkeit aus der Kapsel ausgebildet als Pyramiden 15. Die Pyramiden 15 sind über die Sammelrinnen 57 untereinander und mit dem umlaufenden Sammelkanal 64 verbunden. Der zentrale Vorsprung 53 weist im oberen Bereich seiner Seitenwand die umlaufende Rippe 68 auf, welche in Zusammenwirkung mit den korrespondierenden Rillen 66 (siehe Figur 27) die Bereitschafts- und Betriebsstellung definiert. Für die weiteren Details des Adapters 1 wird auf die Figur 28 verwiesen.

In Figur 41 ist eine vergrösserte perspektivische Ansicht auf den zentralen Vorsprung 53 des Adapters gemäss Figur 40 abgebildet. Die Ansicht ist beschränkt auf den Vorsprung 53, den umlaufenden Sammelkanal 64 mit seinen Sammelrinnen 57 und einigen Pyramiden 15. Im umlaufenden Sammelkanal 64 sind aus dem Sammelkanal vorstehende Abstützflächen 70 ausgebildet, welche ein Verschliessen des Sammelkanals 64 durch die aufgesetzte Kapsel in Betriebsstellung verhindern. Ebenfalls ersichtlich ist die Steigrinne 59, welche zusammen mit der aufgesetzten Kapsel in Betriebsstellung einen Steigkanal 60 (siehe Figur 42) ausbildet.

Die Sammelrinne 59 mündet am oberen Ende, d.h. an ihrem dem Sammelkanal 64 gegenüberliegenden Ende, in den Auslass 9 des Adapters. Ersichtlicherweise führt der Sammelkanal 59 vor seinem Einmünden in den Auslass 9 durch eine Auslassdüse 71, so dass in Betrieb ein Getränkestrahl ausgebildet wird. Dieser Getränkestrahl wird über eine Stufe und eine in dieser Stufe angeordnete Lufteinlassöffnung 62 geführt, damit der Getränkestrahl Luft zur verbesserten Schaumbildung mitreissen kann. Im Auslass 9 ist zusätzlich eine Prallwand 63 angeordnet, welche ein homogenes Vermischen mit Luft bewirkt und die Schaumbildung begünstigt. Ebenfalls im Auslass 9 angeordnet sind fünf Stützpfosten 73, welche die Schaumbildung beeinflussen und die Porengrösse des Schaumes verringern.

Die Figur 42 zeigt eine vergrösserte perspektivische Schnittansicht auf den Auslass 9 des Sets gemäss Figur 39, wobei die Schnittebene durch die Steigrinne 59 (siehe Figur 41) und somit durch den aus Steigrinne und Rücksprung 52 der Kapsel gebildeten Steigkanal 60 verläuft. Der Rücksprung 52 der Kapsel ist mit einer seiner beiden Rillen 66 mit der Rippe 68 des Vorsprungs 53 des Adapters in der Betriebsstellung verrastet. Der durch die Steigrinne und den Vorsprung der Kapsel gebildete Steigkanal 62 mündet in den Auslass 9, wobei ein durch die Auslassdüse 71 (siehe Figur 41) gebildeter Getränkestrahl über die Lufteinlassöffnung 62 geführt wird und anschliessend auf die Prallwand 63 trifft. Durch die Lufteinlassöffnung 62 kann Luft in den Getränkestrahl mitgerissen werden, welche an der Prallwand 63 homogen mit dem Getränk vermischt wird, so dass sich ein Schaum ausbildet. Zusätzlich zur Prallwand 63 sind im Auslass 9 Lenkflügel 72 angeordnet, welche den aus dem Set, bestehend aus Adapter und Kapsel, durch den Auslass 9 austretentenden Getränkestrahl formen und/oder zusätzlich homogenisieren.

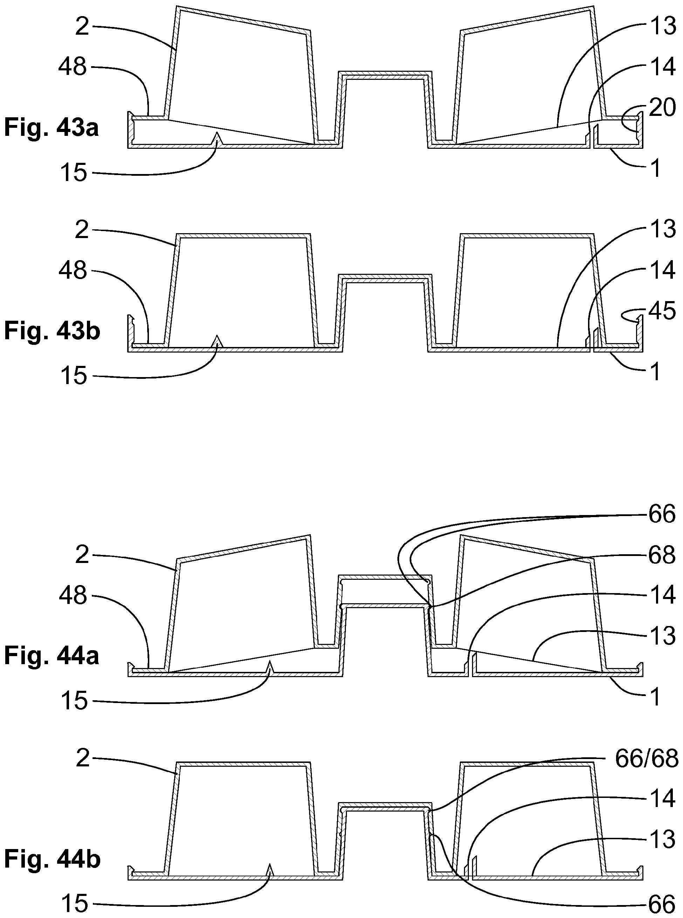

In den Figuren 43a und 43b sowie 44a und 44b sind je in schematischer Darstellung eine alternative Ausführungsform des Wechsels eines Kapsel-Adapter-Sets aus der Bereitschaftsstellung in die Betriebsstellung dargestellt. In den Figuren 43a und 44a ist das Set je in der Bereitschaftsstellung und in den Figuren 43b und 44b je in der Betriebsstellung dargestellt.

In den Figuren 43a und 43b ist die Kapsel 2 auf dem Adapter 1 derart vormontiert, dass die Kapsel 2 im zentralen Bereich bereits komplett auf dem Adapter 1 aufliegt. Im Randbereich, also am flanschartigen Rand 48 ist in der Bereitschaftsstellung die Kapsel 1 in einer Nut 45 des umlaufenden Kragens 20 des Adapters 1 vormontiert. Der Deckel 13 der Kapsel 2 ist unversehrt und schliesst die Kapsel 2 ab. Eine Einstechkanüle 14 zum Einleiten einer Flüssigkeit vom Adapter 1 in die Kapsel 2 ist vom Deckel 13 beabstandet. Ebenso ist eine Pyramide 15 zum Ableiten der Flüssigkeit aus der Kapsel 2 vom Deckel 13 beabstandet. Erst in der Betriebsstellung der Figur 43b liegt auch der flanschartige Rand 48 der Kapsel 2 flach auf dem Adapter 1 auf, so dass der Deckel 13 durch die Einstechkanüle 14 und die Pyramide 15 penetriert ist.

Die Figuren 44a und 44b stellen eine alternative Ausführungsform dar, in deren Bereitschaftsstellung die Kapsel 2 in ihrem zentralen Bereich noch nicht auf dem Adapter 1 aufliegt. Lediglich der flanschartige Rand 48 der Kapsel 2 liegt flach auf dem Adapter 1 auf. Die Kapsel 2 wird im zentralen Bereich durch eine Rille 66 im Rücksprung, welche mit einer Rippe 68 im Vorsprung des Adapters 1 korrespondiert, in der Bereitschaftsposition gehalten. Entsprechend ist der Deckel 13 unversehrt und beabstandet von einer Pyramide 15 zum Ableiten einer Flüssigkeit aus der Kapsel 2 und von einer Einstechkanüle 14 zum Einleiten einer Flüssigkeit in die Kapsel 2. Erst in der Betriebsstellung gemäss Figur 44b liegt die Kapsel 2 auch in ihrem zentralen Bereich auf dem Adapter 1 auf. Die Rippe 68 des Adapters greift in die zweite Rille 66 der Kapsel 2 ein. Der Deckel 13 ist durch die Einstechkanüle 14 und die Pyramide penetriert.

## Patentansprüche

1. Set (47) zur Verwendung bei der Zubereitung eines Getränks mit einer Getränkezubereitungsvorrichtung, umfassend
- eine Kapsel (2) umfassend einen Kapselkörper (24) mit einem insbesondere flanschartigen Rand (48), einen Deckel (13), welcher am Rand (48) angebracht ist und den Kapselkörper (24) zum Ausbilden einer Substanzkammer (49) verschliesst, wobei die Kapsel (2) in der Substanzkammer (49) eine Substanz für die Zubereitung des Getränks enthält;
- einen Adapter (1), der eine Kapselseite (4) und eine Vorrichtungsseite (7) aufweist, wobei auf der Kapselseite (4) Mittel (5) zum Einleiten einer Flüssigkeit in die Kapsel (2) sowie Mittel (6) zum Ableiten einer Flüssigkeit aus der Kapsel (2) derart angeordnet sind, dass sowohl das Einleiten der Flüssigkeit in die Kapsel als auch das Ableiten der Flüssigkeit aus der Kapsel (2) an nur einer Seite der Kapsel (2) ermöglicht wird, und wobei auf der Vorrichtungsseite (7) ein Einlass (8) für eine von der Getränkezubereitungsvorrichtung bereitgestellte Flüssigkeit sowie ein Auslass (9) angeordnet sind;
- wobei der Einlass (8) mit den Mitteln (5) zum Einleiten der Flüssigkeit in die Kapsel (2) und der Auslass (9) mit den Mitteln (6) zum Ableiten der Flüssigkeit aus der Kapsel (2) jeweils fluidmässig verbunden sind, und
- wobei der Adapter (1) und die Kapsel (2) derart in einer Bereitschaftsstellung miteinander verbunden und insbesondere vormontiert sind, dass sie aus der Bereitschaftsstellung insbesondere aufeinander zu in eine Betriebsstellung bringbar sind, in welcher der Einlass (8) des Adapters (1) und die Substanzkammer (49) der Kapsel (2) fluidmässig miteinander verbunden sind.

2. Set (47) nach Anspruch 1, wobei der Deckel (13) der Kapsel (2) in der Bereitschaftsstellung derart im Abstand zur Kapselseite (4) des Adapters (1) gehalten ist, dass die Mittel (5) zum Einleiten der Flüssigkeit in die Kapsel (2) und die Mittel (6) zum Ableiten der Flüssigkeit aus der Kapsel (2) nicht mit der Substanzkammer (49) der Kapsel (2) kommunizieren können.

3. Set (47) nach Anspruch 1 oder 2, wobei der Adapter (1) durch Rastmittel an der Kapsel (2) gehalten ist.

4. Set (47) nach Anspruch 3, wobei der Adapter (1) eine ganz oder teilweise umlaufende Nut (45) aufweist, in welcher der flanschartige Rand (48) der Kapsel (2) eingerastet und/oder eingepresst ist.

5. Set (47) nach Anspruch 3, wobei der Kapselkörper (24) im Zentrum einen vorzugsweise hohlzylindrischen Rücksprung (52) aufweist, an dem die Kapsel (2) an einem korrespondierenden Vorsprung (53) am Adapter (1) eingerastet ist.

6. Set (47) nach Anspruch 1 oder 2, wobei der Adapter (1) durch Reibschluss, Verschweissen, Verkleben, Versiegeln oder über Sollbruchstellen oder durch Kombinationen daraus an der Kapsel (2) gehalten ist.

7. Set (47) nach einem der Ansprüche 1 bis 6, wobei der Adapter (1) an der Kapsel (2) derart vormontiert ist, dass Adapter (1) und Kapsel (2) unter Einwirkung einer Presskraft aus der Bereitschaftsstellung in die Betriebsstellung pressbar sind, in welcher Adapter (1) und Kapsel (2) fluidmässig kommunizieren können.

8. Set (47) nach einem der Ansprüche 1 bis 7, wobei auf der Kapselseite (4) des Adapters (1) Penetrationselemente angeordnet sind, welche gegen den Deckel (13) der Kapsel (2) gerichtet sind zum Erzeugen wenigstens einer Öffnung im Deckel (13) in der Betriebsstellung.

9. Set (47) nach einem der Ansprüche 1 bis 8, wobei die Mittel (5) zum Einleiten der Flüssigkeit in die Kapsel (2) auf der Kapselseite (4) des Adapters (1) wenigstens eine Einstechkanüle (14) umfassen, mit welcher der Deckel (13) der Kapsel (2) in der Betriebsstellung penetrierbar ist.

10. Set (47) nach einem der Ansprüche 5 bis 9, wobei der Adapter (1) an seinem Vorsprung (53) eine Steigrinne (59) aufweist, welche in der Betriebsstellung zusammen mit dem korrespondierenden Rücksprung (52) der Kapsel (2) einen Steigkanal (60) bildet, der mit dem Auslass (9) des Adapters (1) verbunden ist.

11. Set (47) nach Anspruch 10, wobei die Steigrinne (59) derart ausgestaltet ist, dass sie zusammen mit dem Rücksprung (52) der Kapsel (2) eine Auslassdüse (71) zur Ausbildung eines Getränkestrahls formt.

12. Set (47) nach Anspruch 11, wobei im Bereich der Auslassdüse (71) eine Lufteinlassöffnung (62), insbesondere ein Lufteinlassschlitz derart angeordnet ist, dass der Getränkestrahl Luft mitreissen kann.

13. Set (47) nach Anspruch 11 oder 12, wobei der Adapter (1) im Auslass (9) eine Prallwand (63) aufweist, gegen welche die Auslassdüse (71) gerichtet ist.

14. Set (47) nach einem der Ansprüche 1 bis 13, wobei der Kapselkörper (24) ein Tiefziehteil oder ein Spritzgussteil ist und der Adapter (1) ein Spritzgussteil ist, wobei insbesondere der Kapselkörper (24) und/oder der Adapter (1) aus Kunststoff bestehen.

15. Getränkezubereitungssystem umfassend ein Set (47) nach einem der Ansprüche 1 bis 14 und eine Getränkezubereitungsvorrichtung.

## Claims

1. A set (47) for use in the preparation of a beverage by means of a beverage preparation device, comprising
- a capsule (2), comprising a capsule body (24) with an in particular flange-like edge (48), a cover (13) which is attached to the edge (48) and closes the capsule body (24) in order to form a substance chamber (49), wherein, in the substance chamber (49), the capsule (2) contains a substance for the preparation of the beverage;
- an adapter (1) which has a capsule side (4) and a device side (7), wherein means (5) for introducing a liquid into the capsule (2) and means (6) for discharging a liquid from the capsule (2) are arranged on the capsule side (4) such that the introduction of the liquid into the capsule (2) and the discharge of the liquid from the capsule (2) take place on only one side of the capsule (2), and wherein an inlet (8) for a liquid prepared by the beverage preparation device and also an outlet (9) are arranged on the device side (7);
- wherein the inlet (8) is fluidically connected to the means (5) for introducing the liquid into the capsule (2) and the outlet (9) is fluidically connected to the means (6) for discharging the liquid from the capsule (2), and
- wherein the adapter (1) and the capsule (2) are connected to each other and in particular preassembled in a standby position in such a manner that they can be brought out of the standby position, in particular toward each other, into an operating position, in which the inlet (8) of the adapter (1) and the substance chamber (49) of the capsule (2) are fluidically connected to each other.

2. The set (47) as claimed in claim 1, wherein, in the standby position, the cover (13) of the capsule (2) is held at a distance from the capsule side (4) of the adapter (1) in such a manner that the means (5) for introducing the liquid into the capsule (2) and the means (6) for discharging the liquid from the capsule (2) cannot communicate with the substance chamber (49) of the capsule (2) .

3. The set (47) as claimed in claim 1 or 2, wherein the adapter (1) is held on the capsule (2) by latching means.

4. The set (47) as claimed in claim 3, wherein the adapter (1) has an entirely or partially encircling groove (45) in which the flange-like edge (48) of the capsule (2) is latched and/or pressed.

5. The set (47) as claimed in claim 3, wherein the center of the capsule body (24) has a preferably hollow-cylindrical offset (52) at which the capsule (2) is latched to a corresponding projection (53) on the adapter (1).

6. The set (47) as claimed in claim 1 or 2, wherein the adapter (1) is held on the capsule (2) by a frictional connection, welding, adhesive bonding, sealing or via predetermined breaking points or by a combination thereof.

7. The set (47) as claimed in one of claims 1 to 6, wherein the adapter (1) is preassembled on the capsule (2) in such a manner that adapter (1) and capsule (2) can be pressed under the action of a pressing force from the standby position into the operating position, in which adapter (1) and capsule (2) can communicate fluidically.

8. The set (47) as claimed in one of claims 1 to 7, wherein penetration elements are arranged on the capsule side (4) of the adapter (1), said penetration elements being directed toward the cover (13) of the capsule (2) in order to produce at least one opening in the cover (13) in the operating position.

9. The set (47) as claimed in one of claims 1 to 8, wherein the means (5) for introducing the liquid into the capsule (2) on the capsule side (4) of the adapter (1) comprise at least one puncture cannula (14) with which the cover (13) of the capsule (2) can be penetrated in the operating position.

10. The set (47) as claimed in one of claims 5 to 9, wherein the projection (53) of the adapter (1) has a rising channel (59) which, in the operating position, together with the corresponding offset (52) of the capsule (2) forms a rising duct (60) which is connected to the outlet (9) of the adapter (1).

11. The set (47) as claimed in claim 10, wherein the rising duct (59) is configured in such a manner that, together with the offset (52) of the capsule (2), it forms an outlet nozzle (71) for forming a beverage jet.

12. The set (47) as claimed in claim 11, wherein an air inlet opening (62), in particular an air inlet slot, is arranged in the region of the outlet nozzle (71) in such a manner that the beverage jet can entrain air.

13. The set (47) as claimed in claim 11 or 12, wherein in the outlet (9), the adapter (1) has an impact wall (63) toward which the outlet nozzle (71) is directed.

14. The set (47) as claimed in one of claims 1 to 13, wherein the capsule body (24) is a thermoformed part or an injection molded part, and the adapter (1) is an injection molded part, wherein in particular the capsule body (24) and/or the adapter (1) are/is composed of plastic.

15. A beverage preparation system comprising a set (47) as claimed in one of claims 1 to 14 and a beverage preparation device.

## Revendications

1. Ensemble (47) destiné à être utilisé lors de la préparation d'une boisson avec un dispositif de préparation de boisson, comprenant :
- une capsule (2) comprenant un corps de capsule (24) muni d'un bord notamment de type bride (48), d'un couvercle (13), qui est disposé sur le bord (48) et qui ferme le corps de capsule (24) pour former une chambre de substance (49), la capsule (2) contenant dans la chambre de substance (49) une substance pour la préparation de la boisson ;
- un adaptateur (1), qui comprend un côté capsule (4) et un côté dispositif (7), des moyens (5) pour l'introduction d'un liquide dans la capsule (2), ainsi que des moyens (6) pour l'évacuation d'un liquide de la capsule (2) étant agencés sur le côté capsule (4) de telle sorte qu'aussi bien l'introduction du liquide dans la capsule que l'évacuation du liquide de la capsule (2) soit rendue possible uniquement sur un côté de la capsule (2), et une entrée (8) pour un liquide préparé par le dispositif de préparation de boisson, ainsi qu'une sortie (9) étant agencées sur le côté dispositif (7) ;
- dans lequel l'entrée (8) est reliée fluidiquement avec les moyens (5) pour l'introduction du liquide dans la capsule (2) et la sortie (9) est reliée fluidiquement avec les moyens (6) pour l'évacuation du liquide de la capsule (2), et
- dans lequel l'adaptateur (1) et la capsule (2) sont reliés l'un à l'autre dans une position d'attente et notamment préassemblés, de telle sorte qu'ils puissent être amenés de la position d'attente, notamment l'un vers l'autre, dans une position de fonctionnement, dans laquelle l'entrée (8) de l'adaptateur (1) et la chambre de substance (49) de la capsule (2) sont reliées fluidiquement l'une à l'autre.

2. Ensemble (47) selon la revendication 1, dans lequel le couvercle (13) de la capsule (2) est maintenu dans la position d'attente à distance du côté capsule (4) de l'adaptateur (1), de telle sorte que les moyens (5) pour l'introduction du liquide dans la capsule (2) et les moyens (6) pour l'évacuation du liquide de la capsule (2) ne puissent pas communiquer avec la chambre de substance (49) de la capsule (2).

3. Ensemble (47) selon la revendication 1 ou 2, dans lequel l'adaptateur (1) est maintenu sur la capsule (2) par des moyens d'encliquetage.

4. Ensemble (47) selon la revendication 3, dans lequel l'adaptateur (1) comprend une rainure (45) entièrement ou partiellement circonférentielle, dans laquelle le bord de type bride (48) de la capsule (2) est encliqueté et/ou pressé.

5. Ensemble (47) selon la revendication 3, dans lequel le corps de capsule (24) comprend au centre un retrait de préférence cylindrique creux (52), au niveau duquel la capsule (2) est encliquetée au niveau d'une protubérance correspondante (53) sur l'adaptateur (1).

6. Ensemble (47) selon la revendication 1 ou 2, dans lequel l'adaptateur (1) est maintenu sur la capsule (2) par engagement par friction, soudage, collage, scellage ou par l'intermédiaire d'emplacements de rupture privilégiée ou par des combinaisons de ceux-ci.

7. Ensemble (47) selon l'une quelconque des revendications 1 à 6, dans lequel l'adaptateur (1) est préassemblé sur la capsule (2) de telle sorte que l'adaptateur (1) et la capsule (2) puissent être pressés sous l'effet d'une force de pression de la position d'attente dans la position de fonctionnement, dans laquelle l'adaptateur (1) et la capsule (2) peuvent communiquer fluidiquement.

8. Ensemble (47) selon l'une quelconque des revendications 1 à 7, dans lequel des éléments de pénétration sont agencés sur le côté capsule (4) de l'adaptateur (1), qui sont orientés contre le couvercle (13) de la capsule (2) pour la création d'au moins une ouverture dans le couvercle (13) dans la position de fonctionnement.

9. Ensemble (47) selon l'une quelconque des revendications 1 à 8, dans lequel les moyens (5) pour l'introduction du liquide dans la capsule (2) comprennent sur le côté capsule (4) de l'adaptateur (1) au moins une canule d'enfoncement (14), avec laquelle le couvercle (13) de la capsule (2) peut être pénétré dans la position de fonctionnement.

10. Ensemble (47) selon l'une quelconque des revendications 5 à 9, dans lequel l'adaptateur (1) comprend au niveau de sa protubérance (53) une rigole montante (59), qui forme dans la position de fonctionnement conjointement avec le retrait correspondant (52) de la capsule (2) un canal montant (60), qui est relié avec la sortie (9) de l'adaptateur (1) .

11. Ensemble (47) selon la revendication 10, dans lequel la rigole montante (59) est conçue de telle sorte qu'elle forme conjointement avec le retrait (52) de la capsule (2) une buse de sortie (71) pour la formation d'un jet de boisson.

12. Ensemble (47) selon la revendication 11, dans lequel une ouverture d'entrée d'air (62), notamment une fente d'entrée d'air, est agencée dans la zone de la buse de sortie (71), de telle sorte que le jet de boisson puisse entraîner de l'air.

13. Ensemble (47) selon la revendication 11 ou 12, dans lequel l'adaptateur (1) comprend une paroi déflectrice (63) dans la sortie (9), contre laquelle la buse de sortie (71) est dirigée.

14. Ensemble (47) selon l'une quelconque des revendications 1 à 13, dans lequel le corps de capsule (24) est une pièce emboutie ou une pièce moulée par injection, et l'adaptateur (1) est une pièce moulée par injection, le corps de capsule (24) et/ou l'adaptateur (1) étant notamment constitués de matière plastique.

15. Système de préparation de boisson comprenant un ensemble (47) selon l'une quelconque des revendications 1 à 14 et un dispositif de préparation de boisson.
